# EUROPEAN PATENT SPECIFICATION

(11) **EP 4 730 250 B1**
(45) Date of publication and mention of the grant of the patent: **18.11.2026**
(21) Application number: 25209141.8
(22) Date of filing: 16.10.2025
(51) Int. Cl.: G06Q 40/08

(54) **METHOD AND SYSTEM FOR VERIFYING FULFILLMENT REQUESTS**
VERFAHREN UND SYSTEM ZUR ÜBERPRÜFUNG VON ERFÜLLUNGSANFORDERUNGEN
PROCÉDÉ ET SYSTÈME DE VÉRIFICATION DE DEMANDES D'EXÉCUTION

(30) Priority: 16.10.2024 US 202418917214
(43) Date of publication of application: 22.04.2026
(73) Proprietor: Accenture Global Solutions Limited, Dublin 4 (IE)
(72) Inventor: PATIL, Vibhav V, 56004 Bangalore (IN); SINGH BAWA, Gurpreet, 160047 Chandigarh (IN); VELUMANI, Kailash, 560029 Bengaluru (IN)
(74) Representative: Müller-Boré & Partner Patentanwälte PartG mbB

(56) References cited:
- US-A1- 2019 272 549
- US-A1- 2022 300 903
- US-A1- 2023 342 559

## Description

### TECHNICAL FIELD

Various examples described herein relate generally to computer-implemented method, computer system, and computer program product for verification of fulfillment requests.

### BACKGROUND

Insurance is a financial arrangement designed to mitigate risks by transferring potential losses from individuals or entities to an insurance provider. Through insurance policies, individuals pay regular premiums to receive compensation for covered losses, such as medical expenses, property damage, or legal liabilities. For example, health insurance helps in managing medical costs, life insurance supports beneficiaries financially after death of a policy holder, property insurance covers damage to physical assets, and casualty insurance addresses legal liabilities and personal injury claims. Therefore, insurance ensures that the individuals and the entities may recover from financial setbacks and maintain stability. An insurance claim process includes reporting, assessing, and validating claims to determine eligibility for compensation. Further, fraudulent activities, such as exaggerating or fabricating claims, and misuse of an insurance system, may lead to increased costs and unfair treatment for honest individuals, underscoring a need for effective fraud prevention measures.

US20220300903A1 "System and method for dynamically predicting fraud using machine learning" describes a computing device configured to communicate with a central server in order to predict likelihood of fraud in current transactions for a target claim. The computing device then extracts from information stored in the central server (relating to the target claim and past transactions for past claims including those marked as fraud), a plurality of distinct sets of features: text-based features derived from the descriptions of communications between the requesting device and the endpoint device, graph-based features derived from information relating to a network of claims and policies connected through shared information, and tabular features derived from the details related to claim information and exposure details. The features are input into a machine learning model for generating a likelihood of fraud in the current transactions and triggering an action based on the likelihood of fraud (e.g. stopping subsequent related transactions to the target claim).
US 2023/342559 A1 describes a soft prompt tuning technique referred to as the Vector quantized Input-contextualized Prompt (VIP). The VIP techniques has two integral properties i) instead of learning a fixed set of prompt tokens irrespective of the input, it generates a contextualized version of the soft prompts, conditional on the input text ii) it further passes the input-contextualized prompt tokens through a quantization network, inspired by Vector Quantized Transformers. The quantization network uses nearest neighbor search over a learnable codebook to train a discrete latent variable model over the prompt-space, thus generating quantized version of contextual prompt tokens. These quantized contextual prompt tokens are finally fed into the frozen language model along with the original input text.

US 2019/272549 A1 describes a computer-implemented method of fraud protection. A server receives one or more keywords and a likelihood of fraud from an external source. The server receives an image of a document from a user device, wherein the document comprises at least one of a written communication or a printed communication. The server extracts text from the image of the document, compares the extracted text to the one or more stored keywords, and calculates a confidence level of fraud. The server sends an indication of the confidence level of fraud to the user device.

### SUMMARY

Implementations of the present disclosure are generally directed to identification of fraudulent insurance claims using a Generative Artificial Intelligence (Gen AI). More particularly, implementations of the present disclosure are directed to enhancing accuracy of claim classification (e.g., fraudulent cases and authentic cases) through Gen AI, which significantly improves the detection of fraudulent claims and ensures more reliable insurance processing.

The invention is defined by the features of the independent claims. Particular embodiments are the subject of the dependent claims.

It is appreciated that methods in accordance with the present disclosure can include any combination of the aspects and features described herein. That is, the method in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### BRIEF DESCRIPTION OF DRAWINGS

Various examples in accordance with the present disclosure will be described with reference to the drawings, in which:
FIG. 1 illustrates an example environment that may be used to execute implementations of the present disclosure.
FIG. 2 illustrates a block diagram of a system for verifying fulfillment requests, in accordance with implementations of the present disclosure.
FIG. 3 illustrates an example architecture of a linguistic model employed for classifying fulfillment requests, in accordance with implementations of the present disclosure.
FIG. 4 illustrates a detailed process flow for verifying fulfillment requests, in accordance with implementations of the present disclosure.
FIG. 5 is a flow diagram that presents an example method for verifying fulfillment requests, in accordance with implementations of the present disclosure.
FIG. 6 illustrates a computer system that may be used to implement a system for fraudulent claims detection system.

Like reference numbers and designations in the various drawings indicate like elements.

### DETAILED DESCRIPTION

In the following description, various examples will be illustrated by way of example and not by way of limitation in the figures of the accompanying drawings. References to various examples in this disclosure are not necessarily to the same examples, and such references mean at least one. While specific implementations and other details are discussed, it is to be understood that this is done for illustrative purposes only. A person skilled in the relevant art will recognize that other components and configurations may be used without departing from the scope of the claimed subject matter.

Reference to any "example" herein (e.g., "for example," "an example of," by way of an example" or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various examples given in this specification.

Without intent to limit the scope of the disclosure, examples of instruments, apparatus, methods, and their related results according to the examples of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to;" it specifically indicates open-ended inclusion or membership in the so-described combination, group, series, and the like.

The term "a" means "one or more" unless the context clearly indicates a single element.

"First," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A . . . and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality/acts involved.

Specific details are provided in the following description to provide a thorough understanding of examples. However, it will be understood by one of ordinary skill in the art that examples may be practiced without these specific details. For example, systems may be shown in block diagrams so as not to obscure the examples in unnecessary detail. In other instances, well-known processes, structures, and techniques may be shown without unnecessary detail in order to avoid obscuring example examples.

The specification and drawings are to be regarded in an illustrative rather than a restrictive sense. It will, however, be evident that various modifications and changes may be made thereunto without departing from the broader spirit and scope of the disclosure as set forth in the claims.

An insurance is a well-stablished financial tool that provides protection against unforeseen risks by transferring a financial burden of potential losses from individuals or organizations to an insurance company. This protective mechanism is formalized through a contract referred to as an insurance policy. In exchange for regular premium payments, the insurer (e.g., the insurance company) agrees to offer financial compensation or reimbursement to a policyholder or their beneficiaries (e.g., an individual or an organization) for specified losses or damages covered under the insurance policy. The insurance benefits the policyholder or their beneficiaries by alleviating financial impact of covered risks. The insurance encompasses a wide array of sectors, including health, life, property, and casualty, each addressing different types of risks and needs. For example, a health insurance, one of the most critical types of insurance, offers coverage for medical expenses that arise due to illness or injury. The health insurance includes costs associated with hospital stays, medications, surgeries, and other health-related services. The health insurance may be obtained through private insurers or government programs, ensuring that individuals have access to necessary medical care without bearing a full financial burden themselves.

Further, when the policyholder experiences a loss or damage covered by their insurance policy, the policyholder may initiate an insurance claim to receive compensation or reimbursement. An insurance claim process is a structured procedure involving multiple stages. The insurance claim process begins with a stage where the policyholder reports the loss or damage to the insurer, providing all necessary information (including detailed documentation of a corresponding incident). This stage triggers a responsibility of the insurer to assess and address the insurance claim. Following the report, the insurer conducts an assessment and investigation to verify validity of the insurance claim. The verification involves reviewing policy terms, evaluating an extent of damage, and confirming accuracy of the provided information. Once the insurer successfully verifies validation of the insurance claim, the insurer proceeds to process a payment or reimbursement according to terms of the insurance policy.

The integrity of the insurance claim process is compromised when fraudulent claims are introduced. Fraudulent activities (e.g., fraudulent claims) pose a considerable challenge within insurance industry, where individuals may engage in deceptive practices to obtain undeserved benefits. Such fraudulent claims often involve practices such as exaggerating an extent of a loss, fabricating claims, or submitting falsified documentation. These practices not only undermine accuracy of the claim verification process but also threaten financial health of insurance companies and trust placed in an insurance system. Addressing the fraudulent claims effectively is required for maintaining reliability on the insurance system and ensuring that genuine claims are processed fairly and efficiently.

Various methods exist for claim verification. The existing methods have one or more limitations described below in the following paragraphs.

Manual review process: Claim verification in some of the existing methods rely heavily on manual review processes, which is both time-consuming and prone to human error. The manual nature of the existing methods may lead to inefficiencies, especially when handling a large volume of insurance claims. Human reviewers may sift through extensive documentation and data, which increases likelihood of oversight or inconsistent evaluations. The reliance on manual effort not only slows down claim processing time but also makes it challenging to scale operations effectively as the volume of the insurance claims grows.

For example, many of the existing methods use basic rule-based systems. The rule-based systems operate on a set of predefined rules and criteria to assess the insurance claims. While the rule-based systems may handle straightforward cases, they struggle with complex or evolving claim scenarios. Rigidity and lack of adaptability of the rule-based-based systems mean that the rule-based systems may not accurately capture or interpret intricate patterns indicative of fraud. Consequently, the rule-based systems may miss subtle indicators of fraudulent activity or fail to adapt to new and sophisticated methods of fraud.

Another significant limitation of the existing methods is use of simple or generic machine learning (ML) models. The ML models often lack complexity needed to detect intricate fraud patterns effectively. Basic algorithms of the ML models may not have capability to process and analyze intricate data interactions or subtle variations that may signify fraudulent behavior. As a result, the ML models may produce less accurate assessments and fail to identify certain types of fraudulent claims.

Additionally, the existing methods frequently rely on static approaches or static data representations, such as fixed-size embeddings or basic recurrent neural networks (RNNs). The static approaches may be insufficient for capturing the dynamic and multi-dimensional nature of modern data. For example, static embeddings may not effectively represent full context of a claim, leading to a loss of critical information during analysis. This limitation impacts accuracy of fraud detection, as important contextual details that are crucial for identifying fraudulent claims may be overlooked.

An ability to manage long-term dependencies in claim data or input (e.g., information and documentation received or collected during the insurance claim process) is another area where the existing methods often fall short. The long-term dependencies refer to relationships and patterns that span over extended periods or across various pieces of data. The existing systems struggle with maintaining and interpreting these dependencies, which may lead to incomplete or inaccurate context analysis. Without effectively handling the long-term dependencies, the relevance or implications of certain data points may not be understood properly. Thus, overall accuracy of claim evaluation may be affected.

Further, the existing methods often face challenges when it comes to integrating and analyzing both textual and image data in the insurance claims. The insurance claims may involve a combination of textual documentation and visual evidence, such as photographs or medical imaging. The existing methods do not seamlessly integrate these different types of data (textual and image data), which results in a fragmented assessment process. This lack of integration may lead to incomplete evaluations and an increased risk of missing critical information that may indicate a fraud.

Scalability is a significant concern with the existing methods. As volume and complexity of data increase, the existing methods struggle to maintain performance. The limitations in processing power and efficiency become evident when dealing with large datasets or high claim volumes. The scalability issues may result in slower processing times and reduced accuracy, which makes it challenging for insurers to manage and verify the insurance claims effectively on a larger scale.

Sequence-to-Sequence (Seq2Seq) models used for processing sequential data have their own set of limitations. The Seq2Seq models often compress input sequences into fixed-size context vectors, which may lead to a loss of critical contextual information. When important details are omitted or distorted during the compression, the accuracy of classification and fraud detection is negatively affected. The inability of Seq2Seq models to fully capture and retain contextual granularity of claims may result in less effective fraud detection.

Stabilization techniques are employed in neural networks (NNs) to improve performance and efficiency. However, the existing methods often apply these stabilization techniques at a level of an output of an entire neural network, which may be inefficient, particularly when dealing with varying input scales. The lack of approaches which focus on individual sub-layers rather than the entire neural network in the existing methods may result in less effective processing and increased resource usage.

The present disclosure proposes an approach using a linguistic model to address the limitations of existing methods for classifying fraudulent and genuine insurance claims that enhance accuracy, efficiency, and stability of the insurance system. The approach employs one or more of the following mechanisms.

Focus mechanism: The proposed focus mechanism approach uses data converter layers of the linguistic model, which may aid in overcoming issues such as long-term dependencies and context compression by employing a focus mechanism that processes all tokens of the claim data in parallel and dynamically emphasizes relevant parts of an input including the claim data. Thus, the proposed approach provides a more detailed and comprehensive understanding of the context, thereby helping in accurately distinguishing between fraudulent and genuine claims based on intricate details that the existing methods may overlook.

Parallel processing: The proposed parallel processing approach utilizes the focus mechanism to process all tokens of the claim data simultaneously or near simultaneously with an acceptable time delay threshold in processing, and, thereby, significantly speeding up computation. Additionally, the proposed parallel processing approach utilizes an inference unit to inference on the claim data which groups queries (e.g., a verification input prompt) and optimizes attention calculations, further accelerating inference process and reducing latency.

Sub-layer stabilization: The sub-layer stabilization provides granular control by managing stability at the level of each sub-layer of the linguistic model. This granular control prevents fluctuations from propagating, maintains consistent performance across varying input scales, and reduces computational overhead, leading to more reliable and efficient system operation.

Dynamic contextual embeddings: The proposed dynamic contextual embeddings approach uses an embedding technique which generates dynamic, context-aware representations by iteratively refining embeddings based on neighboring elements, instead of static representations that lack adaptability to varying contexts. This may result in richer, more accurate data representations that capture complex relationships and improve ability of the insurance system to identify fraudulent claims by understanding subtle patterns and interactions.

Hybrid activation function: Unlike the existing methods which use activation functions like Rectified Linear Unit (ReLU) and sigmoid that may either fail to capture complex non-linear relationships or suffer from issues like vanishing gradients, in the present disclosure, an approach referenced herein as a hybrid activation function is proposed. The hybrid activation function combines non-linear "Wavelet" functions with adaptive gating mechanisms to model both gradual variations and sequential patterns (dual operation) of the claim data effectively. This dual operation enhances ability to handle complex data and improves overall accuracy and performance.

Overall, the different approaches proposed herein provide a comprehensive solution to the limitations of existing methods by improving accuracy through advanced contextual understanding, enhancing efficiency with the parallel processing, stabilizing performance with the granular control, and leveraging dynamic and hybrid techniques for better data representation and inference.

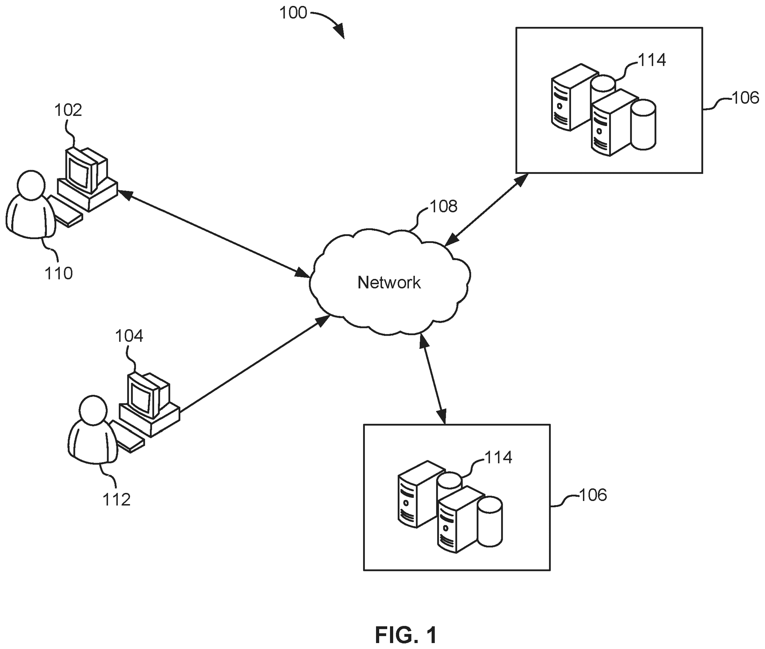

FIG. 1 illustrates an example environment 100 that may be used to execute implementations of the present disclosure. In some examples, the example environment 100 enables verification of fulfillment requests (e.g., insurance claims).

As depicted in FIG. 1, the example environment 100 includes external devices 102 and 104, back-end systems 106, and a network 108. In some examples, the external devices 102 and 104 are used by respective users (e.g., claimants) 110 and 112 to log into and interact with computing platforms executing applications according to implementations of the present disclosure. Examples of the external devices 102 and 104 may include a server, a notebook, a desktop, a netbook, smartphones, laptops, a tablet, and/or voice-enabled devices. It is contemplated that implementations of the present disclosure may be realized with any appropriate type of external device. In some examples, each of the external devices 102 and 104 may include a web browser application executed thereon, which may be used to display one or more web pages of a computing platform executing applications. In some examples, each of the external devices 102 and 104 may display one or more Graphical User Interfaces (GUIs) that enable the respective users 110 and 112 to interact with the computing platform.

In some examples, the network 108 may correspond to a communication network. Examples of the network 108 may include, but are not limited to, a Local Area Network (LAN), a Wide Area Network (WAN), the Internet, Wi-Fi, Long Term Evolution (LTE), Worldwide Interoperability for Microwave Access (WiMAX), General Packet Radio Services (GPRS), or a combination thereof. The network 108 communicatively couples or connects the external devices 102 and 104 with the back-end systems 106. In some examples, the network 108 may be accessed over a wired and/or a wireless communication link. For example, an external device like smartphone may utilize a cellular network to access the network 108.

In some examples, one or more of the back-end systems 106 may be implemented as an on-premises system that is operated by an enterprise or a third-party engaged in cross-platform interactions and data management. In some examples, the back-end systems 106 may be implemented as an off-premises system (for example, a cloud or an on-demand system) that is operated by an enterprise or a third-party on behalf of an enterprise. In some examples, the back-end systems 106 may be implemented in a cloud environment. For simplicity, the back-end systems 106 depicted in FIG. 1 may be a cloud environment that is intended to represent various forms of servers including a web server, an application server, a proxy server, a network server, a server pool, and/or the like.

In some examples, each of the back-end systems 106 includes one or more fraud identification systems 114. A fraud identification system 114 may host components of enterprise systems and applications (for example, an insurance system and an associated application). Also, the fraud identification system 114 exchanges information with the users 110 and 112 through the respective external devices 102 and 104 for services being provided by the enterprise systems and the applications. By way of an example, the users 110 and 112 may provide a fulfillment request (e.g., an insurance claim) through the respective external devices 102 and 104. By way of another example, the users 110 and 112 may receive updates on a status of the fulfillment request through the respective external devices 102 and 104.

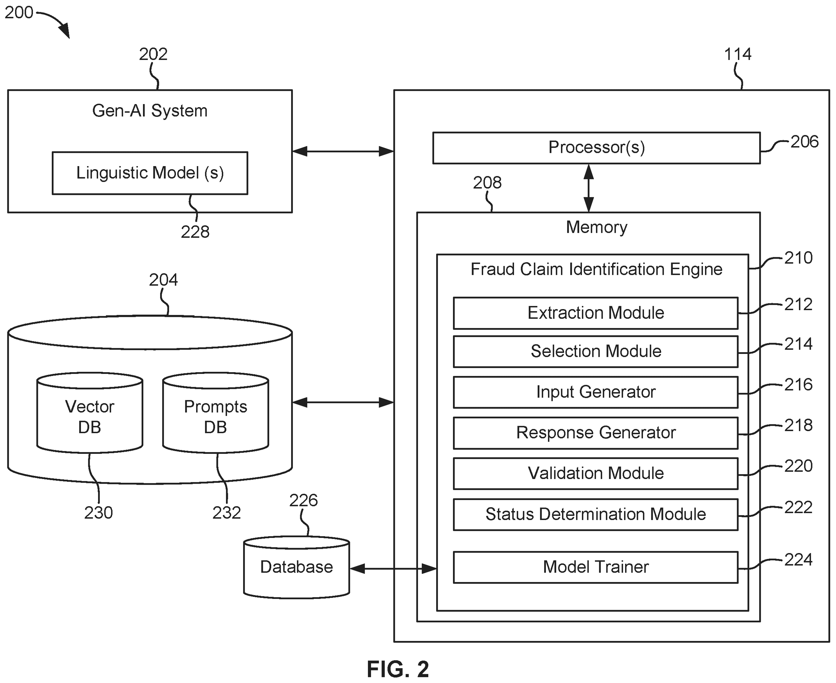

In some examples, based on the received fulfillment request, prompts (e.g., verification input prompts) may be generated by the fraud identification system 114. The verification input prompts may be used as a mode of interaction with a Gen AI system (as depicted in FIG. 2) to perform one or more tasks. For example, a task may be generation of an answer based on a verification input prompt. Further, the fraud identification system 114 may receive the answer to determine a fraud status label and authenticity of the fulfillment request.

According to implementations of the present disclosure, the fraud identification system 114 may be adapted for identifying fraudulent fulfillment requests (e.g., fraudulent insurance claims), which is described in detail in conjunctions with figures below.

FIG. 2 illustrates a block diagram of a system 200 for verifying fulfillment requests (e.g., insurance claims), in accordance with implementations of the present disclosure. FIG. 2 is explained in conjunction with FIG. 1. As depicted in FIG. 2, the system 200 includes the fraud identification system 114, a Gen AI system 202, and a domain database (DB) 204. The fraud identification system 114 may be communicatively coupled to the Gen AI system 202, and the domain DB 204.

The Gen AI system 202 includes one or more linguistic model(s) 228. One of the linguistic models 228 may be used during validation of fulfillment request. In some implementations, the Gen AI system 202 includes a hosting infrastructure (not depicted in FIG. 2) to host a linguistic model 228. Examples of the hosting infrastructure may include cloud computing platforms or the like. In some examples, the linguistic model 228 may be provided by one or more third parties. In some other examples, the linguistic model 228 may be provided by one or more enterprises (such as an insurance company), which deploys the fraud identification system 114. The linguistic model 228 understands, generate, and process human language. The linguistic model 228 is trained using deep learning techniques and based on extensive datasets including diverse sources, allowing them to learn patterns, context, and dimensions in human language. The linguistic model 228 performs language and/or image processing tasks including text generation, translation, summarization, question-answering, and the like. In some examples, the linguistic model 228 refers to a model that use deep learning techniques and have a plurality of parameters, which may range from millions to billions. Further, the linguistic model 228 is accessed through an Application Programming Interface (API), which serves as a gateway for receiving requests or prompts corresponding to the requests.

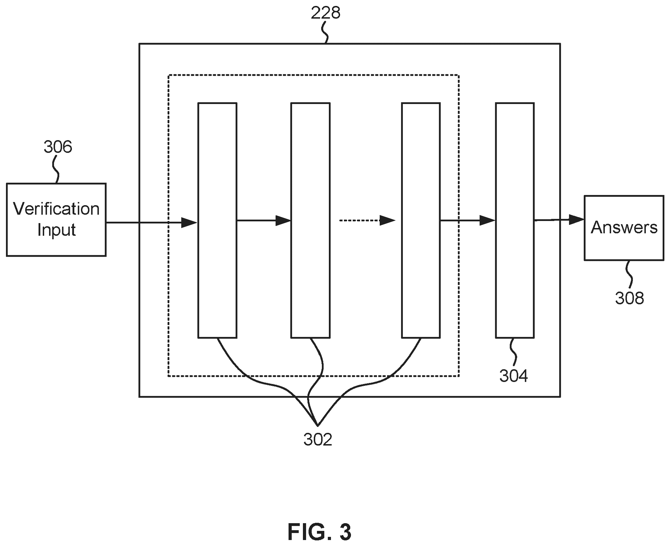

The linguistic model 228 includes a plurality of data converter layers and a linear classification layer. Each of the plurality of data converter layers includes a data representation layer, a positional encoding layer, and a multi-head focus layer. The linguistic model 228 processes prompts (such as verification input prompts) generated by the fraud identification system 114 and helps in generating responses or answers for the prompts. The prompts may be generated for the fulfillment request received via the external devices 102 and 104 from the respective users 110 and 112, respectively. In an example, a prompt may be generated based upon content data extracted from a vector DB 230, and a prompt selected from a prompts DB 232, for the fulfillment request. In another example, the prompt may be generated based upon a previous answer generated by the linguistic model 228. The linguistic model 228 may generate the responses/contents for the prompt based on any appropriate modality (for example, text, audio, image, video, and/or the like). An exemplary conceptual architecture of the linguistic model 228 is explained in detail in conjunction with FIG. 3.

The domain DB 204 include the vector DB 230 (also referenced herein as vector store, or knowledge/graph database) and the prompts DB 232. The vector DB 230 is a database that manages and retrieves high-dimensional vector representations, or embeddings, of data (e.g., the content data extracted from a plurality of documents related to the fulfillment request). The vector DB 230 enables semantic search by finding and retrieving the most relevant vectors based on similarity for given data. The vector DB 230 may be queried to retrieve relevant historical data, similar questions, or contextually appropriate information that helps in generating a meaningful and contextually relevant prompt by the linguistic model 228.

The prompts DB 232 is a repository that manages a diverse array of prompt templates, question formats, and context-specific cues that facilitate effective interaction with the linguistic model 228. The prompts DB 232 stores a collection of pre-defined and dynamically generated prompts that guide the linguistic model 228 in producing accurate and contextually relevant responses/answers. The prompts DB 232 stores the various prompt templates that optimize performance of the linguistic model 228 for different types of inquiries. The prompts DB 232 supports contextual adaptation by including prompts tailored to specific scenarios, ensuring that responses/answers align with requirements. Additionally, the prompts DB 232 enables dynamic generation of new prompts based on evolving needs and trends, facilitating adaptability to changing contexts. The prompts DB 232 also allows for the retrieval and reuse of previously generated and/or used prompts, helping maintain consistency and quality in interactions. The prompts DB 232 provides well-structured prompts that lead to more precise and meaningful outputs.

The fraud identification system 114 includes a computing device (not shown in FIG. 2). Further, the computing device includes one or more processor(s) 206 and a memory 208. The processor(s) 206 may include, for example, microprocessors, microcomputers, microcontrollers, digital signal processors, central processing units, state machines, logic circuits, and/or any devices that manipulate data or signals based on operational instructions. The memory 208 may be a non-volatile memory or a volatile memory. Examples of the non-volatile memory may include, but are not limited to, a flash memory, a Read Only Memory (ROM), a Programmable ROM (PROM), Erasable PROM (EPROM), and Electrically EPROM (EEPROM) memory. Examples of the volatile memory may include, but are not limited, a Dynamic Random Access Memory (DRAM), and a Static Random-Access Memory (SRAM).

The memory 208 may be communicatively coupled to the processor(s) 206. The memory 208 stores instructions, which upon execution by the processor(s) 206, cause the processor(s) 206 to perform various operations described in the present disclosure. The memory 208 includes a fraud claim identification engine 210. The instructions stored in the memory 208 may define operations of the fraud claim identification engine 210.

The fraud claim identification engine 210 employs a multi-verification process for validating the fulfillment request. Initially, a first level of verification is conducted to assess authenticity of the fulfillment request. If the first level of verification is unsuccessful, the fulfillment request is labeled as fraudulent fulfillment request. If the first verification is successful and confirms the legitimacy of the fulfillment request, a subsequent, or second, level of verification is then performed. This layered approach ensures a thorough examination, reducing likelihood of fraudulent activity and enhancing the overall accuracy and reliability of the validation process.

The fraud claim identification engine 210 includes an extraction module 212, a selection module 214, an input generator 216, a response generator 218, a validation module 220, a status determination module 222, and a model trainer 224.

In an implementation, the fraud claim identification engine 210 may be coupled with a database 226. The database 226 may be configured to store various data and intermediate results generated by the components 212-224. For example, the database 226 may store a fulfillment request received from the users 110-112 through the respective external devices 102 and 104, extracted content data, selected prompts or templet, generated verification input prompts, answers generated for the verification input prompts, results of comparisons of answers with the content data, fraud status labels, and the like, which are described in detail below.

The extraction module 212 handles and process the fulfillment request(s) received from the devices managed by various entities (e.g., external devices 102-104 managed by the users 110-112). The entities may include users, administrators, individuals, organizations, or the like. Examples of the fulfillment request may include, but are not limited to, a health/medical insurance claim, a property insurance claim, a vehicle insurance claim, and/or the like. For brevity, the medical insurance claim is used as an example of the fulfillment request for explanation. However, similar processes may be implemented for other types of claims. In an example, during the first level of verification, upon receiving the fulfillment request, the extraction module 212, in coordination with the processor 206, begins a process of extracting content data from a collection of documents related to the fulfillment request. The content data may be stored in the vector DB 230 within the domain DB 204 in a form of vector representation/embedding vector. In some examples, the documents may include pharmacy bills, medical reports, lab results, forms submitted for reimbursement of expenses, history records, of patients, prescription document, appointment records, discharge summary document, billing statements, or the like. The extraction module 212 systematically sifts through the collection of documents to gather the content data needed to address the fulfillment request. The content data may refer to specific fields included in the collected documents, for example, preferred medicines/treatment, disease names, date of service, bill amounts, claim number(s), insurance coverage, and/or the like. In another example, during the subsequent level of verification or the second level of verification, the extraction module 212 extracts imaging data associated with the content data and the successfully verified first answer generated during the first level verification, from the database 226. Examples of the imaging data may include X-ray reports, Computed Tomography (CT) scan reports, Magnetic Resonance Imaging (MRI) reports, ultrasound images, Positron Emission Tomography (PET) scan results, and/or radiology images. The extraction module 212 is communicatively coupled to the selection module 214 to allow for a streamlined workflow where extracted content data may be efficiently processed for further processing or decision-making.

The selection module 214 interacts with the prompts DB 232 within the domain DB 204 to identify and choose an appropriate prompt (e.g., a first prompt or a second prompt). By way of an example, during the first level of verification, the selection module 214 selects the first prompt based on the content data extracted by the extraction module 212. Once the extraction module 212 gathers necessary information (e.g., the content data) from the documents related to the fulfillment request, the selection module 214 leverages the content data to determine which prompt from a variety of prompts stored in the prompts DB 232 is most suitable for a given context. To achieve this, the selection module 214 performs a series of steps. First, the selection module 214 accesses the prompts DB 232, which includes prompt templates and context-specific cues. Each prompt is designed to elicit specific types of responses or answers from the linguistic model 228, tailored to different scenarios or information needs. The selection module 214 analyzes the extracted content data to understand context and requirements of the fulfillment request. Based on this analysis, the selection module 214 performs a keyword-based search to evaluate stored prompts and identify one that best aligns with the extracted content data. Selection of the prompt involves matching key elements from the content data with the characteristics and objectives of the prompts in the prompts DB 232. The selection module 214 selects the prompt that may guide the linguistic model 228 to generate a response or an answer that is accurate, relevant, and contextually appropriate. Similarly, during the second level of verification, when the first level of verification is successful, the selection module 214 selects a second prompt based upon the first answer that is validated to match with the extracted content data and generated using the linguistic model 228, from the prompts DB 232. The selection module 214 may be communicatively coupled to the input generator 216 for providing the selected prompts to the input generator 216.

The input generator 216 generates verification input prompts. In an example, during the first level of verification, the input generator 216 generates a first verification input prompt. The input generator 216 uses the extracted content data and the selected first prompt to generate the first verification input prompt. The first input verification prompt elicits the response or the answer from the linguistic model 228 that helps determine authenticity of the fulfillment request. Once the first level verification is completed successfully and a first response (e.g., the first answer) is generated and verified, the second level of verification may be performed. At the second level of verification, the input generator 216 utilizes the first response or the successfully verified first answer from the first level of verification and the selected second prompt, to generate the second verification input prompt. The second verification input prompt incorporates additional context and details to further validate the fulfillment request. The input generator 216 is communicatively coupled to the response generator 218.

The verification input prompts (e.g., the first verification prompt and the second verification prompt) generated by the input generator 216 are then provided to the response generator 218. The response generator 218 generates the responses or answers, using the linguistic model 228, based upon the received verification input prompts. The terms "response(s)" and "answer(s)" are used interchangeably in the disclosure. In an example, during the first level of verification, the response generator 218 generates the first response or the first answer based upon the received first verification input prompt. In another example, when the first level of verification is successful, the response generator 218, during the second level of verification, generates the second response or the second answer based upon the received second verification input prompt from the input generator 216 and the imaging data extracted by the extraction module 212, using the linguistic model 228. The response generator 218 may analyse the verification input prompts (e.g., the first and the second verification input prompts) using the linguistic model 228 to produce the first and the second answers that contribute to a comprehensive evaluation of the fulfillment request.

In particular, for example, during the first level of verification, a numerical vector corresponding to each token in the first verification input prompt is created using an embedding technique. The embedding technique is explained in detail in conjunction with FIG. 3. The token refers to a single unit of text that has been processed into a form suitable for analysis. For example, the token may correspond to a word in the first verification input prompt. In other words, a numerical representation for each token is generated, making it suitable for further processing. Further, location data to each numerical vector based upon a position of each token in a sequence of the first verification input prompt may be assigned. By incorporating this positional information (e.g., the location data), an order and structure of the tokens are maintained, which is important for accurately capturing the context of the content data or the first verification input prompt. With the numerical vector and their associated location data, the data converter layers of the linguistic model 228 is utilized by the response generator 218 to capture contextual information from the first verification input prompt. As described herein, the contextual information is captured based upon the location data corresponding to each numerical vector representing how tokens relate to one another based on their positions and the surrounding context. The linguistic model 228 interprets these relationships to build a comprehensive understanding of the verification input prompt.

Further, in some implementations, the linear classification layer of the linguistic model 228 is used by the response generator 218 to generate the first answer based upon the captured contextual information. In other words, the response generator 218 uses insights gained from the contextual information to generate a coherent and contextually appropriate response (e.g., the first answer).

In some other implementations, the linear classification layer may be used to generate an output vector based on the contextual information. The contextual information is integrated into a representation vector (e.g., the output vector) based upon contextual information of neighboring tokens in the sequence of the first verification input prompt. Further, the output vector may be processed through one or more additional data processing layers which may be used to generate the first answer. Once the first answer is successfully validated by the validation module 220 (validation process is explained in next paragraph), the generation of the second answer may proceed in a manner similar to that of the first answer. The second answer generation process follows the same methodology as explained for the generation of the first answer. The first answer generated during the first level of verification, or the second answer generated during the second level of verification, are transmitted to the communicatively coupled validation module 220.

In some implementations, the validation module 220 may receive the first answer during the first level of verification generated by the response generator 218. Further, the validation module 220 validates the first answer generated using the linguistic model 228 by comparing the first answer with the content data. For example, if a match is found between the first answer and the content data, the validation is considered as a successful validation. Otherwise, when the first answer does not match to the content data, the validation may be considered as an unsuccessful validation. Further, in some implementations, once the first answer is validated successfully and the second answer is generated during the second level of verification, the validation module 220 may receive the second answer generated by the response generator 218. Further, the validation module 220 validates the second answer using the linguistic model 228 by comparing the second answer with the first answer, content data, and/or the imaging data. For example, if a match is found between the second answer and the content data, the imaging data and/or the first answer, the validation is considered as a successful validation. Otherwise, when the second answer does not match to the content data, the imaging data and/or the first answer, the validation may be considered as an unsuccessful validation.

The status determination module 222 determines a fraud status label of the fulfillment request based on the validation of answers. The status determination module 222 determines the fraud status label of the fulfillment request based on the validation of the first answer during the first level of verification. For example, the status determination module 222 determines that the fraud status label of the fulfillment request is a fraudulent fulfillment request upon determining the first answer failed to match with extracted content data. For another example, the status determination module 222 determines that the fraud status label of the fulfillment request is a genuine fulfillment request upon determining that the first answer successfully matched with extracted content data. Further, during the second level of verification, the status determination module 222 determines the fraud status label of the fulfillment request based on the validation of the second answer. For example, the status determination module 222 determines that the fraud status label of the fulfillment request is a fraudulent fulfillment request upon determining the second answer failed to match with the extracted content data and/or the first answer. For another example, the status determination module 222 determines that the fraud status label of the fulfillment request is a genuine fulfillment request upon determining that the second answer is successfully matched with the extracted content data and/or the first answer.

The model trainer 224 is responsible for training the linguistic model 228. The model trainer 224 leverages a sophisticated approach to optimize performance and accuracy based on an architecture described further in FIG. 3. The model trainer 224 initializes training process by preparing a diverse dataset that includes both textual and imaging data, ensuring the linguistic model 228 is exposed to a wide range of input types and contexts. The model trainer 224 utilizes techniques such as the AutoFocus class, which enhances efficiency by stacking up to, for example, "100 layers" of the data converter layers and employing a data connection layer to manage information transfer and reduce computational overhead. Additionally, the model trainer 224 utilizes Parameter Odds Adjustment Strategy (POAS) for hyper parameter tuning of the linguistic model 228. The POAS combines instruction tuning and preference adjustment into one single training process. The POAS modifies standard linguistic modelling objectives by adding odd term to loss function. The odd terms penalize rejected response and reward preferred ones. The utilization of the POAS helps the model trainer 224 to dynamically prioritize and refine input (e.g., the dataset including the textual and imaging data).

During training, the linguistic model 228 is exposed to numerous iterations of data processing, incorporating focus mechanism to dynamically prioritize and refine input through multi-head attention and embedding techniques. The model trainer 224 employs optimization methods (e.g., sub-layer stabilization technique) to enhance the performance of the linguistic model 228. The optimization method focuses on fine-tuning the activations and parameters of the linguistic model 228, which involves adjusting how the linguistic model 228 responds to various inputs (e.g., verification input prompts). Additionally, the model trainer 224 utilizes hybrid activation techniques to ensure robust performance across different scenarios. The training process includes continuous monitoring and adjustment of the activations within each sub-layer or the data converter layers of the linguistic model 228 to maintain stability and prevent performance degradation. By iteratively refining ability of the linguistic model 228 to understand and contextualize verification inputs, the model trainer 224 ensures that the linguistic model 228 achieves high accuracy and efficiency in generating relevant and contextually accurate responses.

By way of an example, consider a scenario where a patient named as "A" has been admitted to a hospital for treatment of disease "X" (for example, brain cancer). During stay of "A", several documents are generated, including pharmacy bills, doctor prescriptions, and Computed Tomography (CT) scans. The patient A using the respective external device submits the fulfillment request (e.g., a medical insurance claim). The fulfillment request may be received by an insurance provider or a third-party associated with the insurance provider. The fulfillment request may be submitted, for verification, to the fraud identification system 114. The fraud identification system 114 utilizes a medical prompt library, which includes pre-defined prompts tailored to various medical documents. For pharmacy bills of the patient "A", the fraud identification system 114 selects a prompt that asks about the specific medications prescribed for condition of the patient. The prompt may be "You are excellent in prescribing medicines for a particular disease or ailment given to you. The patient is suffering from disease 'X'; can you provide the line of treatment and the prices of the prescribed medications?" Once this prompt is populated with details of the patient "A", it is sent to the fraud identification system 114. The fraud identification system 114 analyzes the prompt and responds with the answer including information about the medications and their costs. For example, the fraud identification system 114 may confirm that the patient "A" needs to be prescribed a specific chemotherapy drug along with its price. Thereafter, the fraud identification system 114 checks such information against the vector DB 230, which includes verified data from previous claims. If the information match details associated with the fulfillment request within the vector DB 230, the verification process moves forward. If the information does not match the details within the vector DB 230, the fraud identification system 114 flags the claim as potentially fraudulent and the process ends there. This step is crucial as it helps prevent any discrepancies from slipping through. For brevity, only one example case is explained, however there may other applications where the fraud identification system 114 may be implemented.

Once the pharmacy bills and prescriptions are validated, the focus shifts to diagnosis imaging, for example, the CT scans. The CT scans, along with a prompt ID that indicates what specific details need to be analyzed may be provided to the fraud identification system 114. The prompt ID may correspond to the second verification input prompt. The analysis provides critical information, such as a size and location of any tumors detected in CT scans. Finally, the fraud identification system 114 compares findings from the CT scans with the details in the prescription. If the findings align, for example, if the CT scans confirm the presence of a tumor that the doctor prescribed medication for, the fulfillment request is validated. However, if there are inconsistencies, such as a discrepancy in the size of the tumor, the fraud identification system 114 flags the fulfillment request as suspicious.

FIG. 3 illustrates an example architecture of the linguistic model 228 employed for classifying fulfillment requests or insurance claims, in accordance with implementations of the present disclosure. FIG. 3 is explained in conjunction with FIGs. 1-2.

The linguistic model 228 is capable of parsing images as well as text (e.g., images and text related to the fulfillment requests). In some implementations, the linguistic model 228 may be an ensemble model. Examples of the linguistic model 228 may include, but are not limited to, a Large Language Model (LLM), a Generative Pre-trained (GPT) Vision model, a Gemini Pro Vision model, a Vision and Language Transformer (ViLT) and/or the like.

As depicted in FIG. 3, the linguistic model 228 includes data converter layers 302 and a linear classification layer 304. Each of the data converter layers 302 includes a data representation layer, a positional encoding layer, and a multi-head focus layer (not shown in FIG. 3). The data converter layers 302 are employed for capturing the contextual information based on verification input 306, and the linear classification layer 304 is employed for generating an output vector or answers 308 based on the contextual information. In an implementation, the verification input 306 may include a first verification input prompt. The first verification input prompt may include content data extracted from various documents related to a fulfillment request and a first prompt selected based on the content data from the prompts DB 232. The various documents may be stored within the vector DB 230. In such implementation, the answers 308 may include a first answer generated for the first verification input prompt. In another implementation, the verification input 306 may include a second verification input prompt and imaging data associated with the content data. The second verification input prompt includes the first answer generated using the linguistic model 228, and a second prompt selected based on the first answer from the prompts DB 232. In such a case, the answers 308 may include a second answer generated for the second verification input prompt and the imaging data.

Initially, a numerical or requested vector is generated for each token in the verification input 306. In case of textual data, the token refers to a single unit of text. The single unit of text may be a word, a sub-word, or a character. In case of imaging data, the token refers to a specific region or patch within the imaging data. For example, in image processing, the token may represent a small section of image matrix (e.g., a 3x3 pixel area). For generating the textual data, a neural network (NN) different from the linguistic model 228 is used that has learned representations for various tokens. The NN uses an embedding technique which is explained further in following paragraphs in detail. Each word or token is converted into the numerical vector (e.g., numerical vector of size "512"), capturing semantic essence of each token in a structured numerical form. If the verification input 306 includes the imaging data, such as a computed tomography (CT) scan or X-radiations (X-ray) image, the data converter layers 302 flattens image matrices (e.g., 3x3 matrices) into numerical vectors of the same size, enabling integration of visual information into a processing pipeline.

The embedding technique used to generate the numerical or requested vectors offers a sophisticated and dynamic approach for representing the verification input 306. The embedding technique places a strong emphasis on understanding and leveraging relationships between tokens within a multi-dimensional space. The embedding technique allows for a deeper and more refined understanding of data within the verification input 306. By incorporating insights from neighboring tokens, intricate patterns and structures may be detected and represented within the data, resulting in richer, more detailed descriptions that significantly enhancing ability of the linguistic model 228 to pick up on subtle clues and complex relationships.

Moreover, the embedding technique uses a sequential updating process. The sequential updating process begins with a current representation of a token or an entity, which is then iteratively refined by integrating contextual information from nearby tokens or entities. The sequential updating process may be processed through an aggregation function that effectively merges a current representation with relevant contextual insights. The sequential updating process provides a dynamic approach that allows representations of the tokens or entities to evolve over time, resulting in deeper, clearer, and more contextually accurate representations of the tokens or entities. The representations are updated continuously based on the evolving context provided by the neighboring tokens or entities. This means that as new data or changes in context occur, the representations may be adjusted, accordingly, maintaining accuracy and relevance of predictions of the linguistic model 228.

The embedding technique may be expressed as per equation (1) given below: $Description entity \left(t\right) = Aggregation \left(Description entity\left(t-1\right),Contextentity\right)$ equation (1)

"Description entity (t)" represents a vector for a specific token or entity at time "t", capturing a current state or understanding of the token or entity, incorporating both its previous representation and contextual information. "Description entity (t-1))" refers to a representation vector of the specific entity or token at a previous time (t-1). "Contextuality" denotes the contextual information derived from surrounding neighboring tokens or entities. The aggregation function selectively integrates the contextual information along with the previous representation of the specific token or entity into the current representation vector, enabling refinement of the representations based on the local context. The local context refers to the surrounding tokens or entities that are relevant to the specific token or entity being represented. The local context includes information about surrounding or neighboring tokens or entities that influence the understanding and interpretation of the current token or entity.

Additionally, a multi-dimensional space is used to understand relationships between tokens or entities adds another layer of sophistication. By operating in the multi-dimensional space, data points may be represented in a way that preserves more of their inherent complexity and relational dynamics. In the multi-dimensional space, each token or entity is mapped to a vector in a space defined by multiple dimensions, allowing for a richer depiction of their characteristics and relationships.

Following the generation of numerical or requested vectors, a next step involves generating location data or positional data for each token or entity in an input sequence of the verification input 306. The input sequence refers to an ordered sequence of tokens or words in the verification input 306. In the case of the textual data, the input sequence includes a series of tokens (such as words or sub-words) arranged in an order the tokens appear in the verification input 306. For the imaging data, the input sequence is a sequence of flattened image tokens representing different regions or patches of the imaging data. Each numerical or requested vector is assigned with the location data or positional data that indicates a position of each token within the input sequence. To generate the location data or positional data for the numerical or requested vectors, trigonometric functions are employed. The trigonometric functions encode relative positions of tokens, ensuring that the linguistic model 228 may understand and maintain order of tokens within the input sequence.

Once the numerical vectors or requested vectors with assigned location data or positional data are generated, a next step is to capture contextual information from the verification input 306. The numerical or requested vectors with assigned location data may be processed using the linguistic model 228. The terms "location data" and "positional data" are used interchangeably in some implements of the disclosure. Capturing the contextual information involves analyzing relationships and interactions between tokens or entities based on their numerical representations (e.g., the numerical or requested vectors with assigned location data). The data converter layers 302 process the verification input 306 through a focus mechanism that leverage the numerical or requested vectors to understand how each token relates to other tokens in the input sequence. Using the focus mechanism each token is generated based on weighted combination providing dynamic and fine-grained context or meaning, by directly focusing on the relevant part of the verification input 306. Further, the focus mechanism may process all tokens or entities simultaneously rather than sequentially, enabling efficient parallelization and long-term dependencies. The focus mechanism captures all tokens in sequence, effectively capturing overall contextual information. Further, the focus mechanism dynamically focuses on different parts of the input sequence. Therefore, by considering meaning of each token (represented by its numerical or requested vector with assigned location data), the linguistic model 228 may build a refined understanding of context information of the verification input 306. This step ensures that the linguistic model 228 comprehends not just individual tokens but also the overall context and structure of the verification input 306, allowing for a more accurate interpretation and response. Further, the use of focus mechanism ensures that the linguistic model 228 may better interpret complex inputs by dynamically adjusting the emphasis placed on various components of the complex input. The complex inputs may include, but are not limited to, data that includes intricate relationships, varied meanings, or multiple layers of information. For example, the complex input may include ambiguous text (e.g., a sentence that have multiple meanings or require contextual understanding to interpret correctly, such as idioms or phrases with homonyms), long textual sequences (e.g., extended paragraphs or documents where the meaning depends on relationships between many tokens over a larger context), mixed data types (e.g., inputs that combine different forms of data, such as text combined with images or structured data), domain specific language (e.g., text that includes specialized terminology or jargon, such as medical, legal, or technical documents, which may not be easily understood without context), and/or the like.

To capture the contextual information in accordance with the focus mechanism, the numerical vector assigned with the positional data is compared with an index vector to obtain a contribution vector, while providing focus scores for the contribution vector. The index vector may correspond to a reference vector that define predefined values associated with each token. The contribution vector represents contextual information and reflects how each token influences a final output. A high focus score or weight may be provided to the contribution vector when the respective numerical vector and the index vector are semantically closer to each other, which may lead to greater emphasis on the corresponding contribution vector. For example, the higher focus scores or weights are assigned to the contribution vector with the tokens/entities that are semantically closer to each other among the other tokens, improving the accuracy and depth of contextual understanding.

With regards to the data converter layers 302, the data converter layers 302 has a multi-layered architecture that enhances ability of the linguistic model 228 to process the verification input 306 effectively. Each layer of the data converter layers 302 builds upon an output of a previous layer, creating a hierarchical and iterative processing structure. The multi-layered architecture incorporates two focus layers, with each layer featuring multiple attention heads. The focus layers are designed to refine input data (e.g., the numerical vector and the index vector) by calculating the focus scores, which help prioritize different tokens or features based on their relevance. The multiple attention heads within each focus layer allow the linguistic model 228 to simultaneously capture various relationships within the input data, improving its ability to understand complex patterns. As the input data progresses through each focus layer, the input data undergoes further processing and refinement according to the focus scores computed by the attention heads. An output from one focus layer is passed as input to another focus layer, ensuring that each focus layer builds upon the context established by the previous ones. The multilayered architecture allows the linguistic model 228 to extract diverse attention patterns and contextual insights. Each sub-layer is followed by normalization steps and includes residual connections to ensure stability and efficiency in the processing.

The linguistic model 228 employs an inference unit, which uses an AutoFocus class that stacks, for example, up to "100 layers" of each of the described data converter layers 302, with a data connection layer (not shown in FIG. 3) facilitating efficient transfer of information between the data converter layers 302. The data connection layer helps in increasing processing speed and robustness of the linguistic model 228 by reducing information volume beyond a threshold and storing it as a sparse vector. Information volume refers to amount of data or information that needs to be processed by the linguistic model 228 at a point of time. The information volume may include a number of tokens, a size of vectors, and the overall complexity of input data. Managing information volume involves reducing redundancy and irrelevant details, thereby minimizing data that flows through processing pipeline. Therefore, the linguistic model 228 may operate more efficiently, ensuring that only the most relevant information is retained and stored as sparse vectors, which enhances both processing speed and robustness.

In some implementations, the data converter layers 302 of the linguistic model 228 operates in an autoregressive manner, starting with a designated start token and generating the contribution vectors or outputs sequentially. During this phase, previously generated outputs or answers are used as part of the verification input 306, along with enriched encoder outputs, to produce subsequent tokens until an end token is reached. The autoregressive approach ensures that the output generation is coherent and contextually relevant. Finally, the processed verification input 306 is used to generate a final output, leveraging the refined focus and captured contextual information. The verification input 306 undergoes thorough analysis through the data converter layers 302, leading to the output vector that accurately reflects details and context (e.g., contextual information) of the verification input 306. The processing through the data converter layers 302 ensures that the verification input 306 is effectively understood and analyzed, facilitating accurate responses and decision-making.

In some implementations, the model trainer 224 utilizes a hybrid activation technique to reduce variability in an output of each of the data converter layers 302. The output corresponds to the contribution vector. The hybrid activation technique introduces a hybrid activator that combines elements from two different families of activators, leveraging their complementary strengths. The hybrid activator integrates multiple mechanisms to enhance effectiveness across various tasks (for example, generation of the output/contribution vector). The hybrid activator includes a non-linear component "Wavelet," which captures smooth, gradual variations in data or weights in the data converter layers 302 through a non-linear transformation, helping model complex and/or non-linear relationships within data. Alongside this, the hybrid activator features a gating mechanism that divides the input tensor into separate pathways, one for linear transformation and other for operations influenced by data distribution. The gating mechanism is particularly effective for sequential data, while dynamically adjusting flow of the information to capture temporal dependencies and sequential patterns more accurately. The gating mechanism allows the linguistic model 228 to adjust in real-time, prioritizing certain data inputs based on their relevance at a point of time, ensuring that the most important information is emphasized while less relevant information is minimized. As a result, temporal dependencies are captured effectively, enabling the linguistic model 228 to recognize how current inputs relate to previous ones, which is important for maintaining context and continuity. Additionally, the gating mechanism identifies sequential patterns by adjusting the pathways through which the information flows, allowing the linguistic model 228 to learn relationships that occur over time. This is particularly vital in tasks like natural language processing, where the meaning of a word may change depending on its position within a sentence. The gating mechanism significantly enhances the ability of the linguistic model 228 to accurately process sequential data by capturing and utilizing the intricate relationships and dependencies within the sequence. This dual-operation approach provides a robust and flexible mechanism for data representation, offering improvements in accuracy and efficiency, particularly in sequential data tasks (e.g., tasks that involve data organized in a specific order or sequence). Examples of the sequential tasks may include text generation (e.g., generation of the contextual information). Mathematically, the hybrid activator is expressed as per equation (2) given below: $Output = Wavelet \left(β∗Input\right) ⊙ \left(Liner Transformation\left(Input\right)\right.$ equation (2)

Here, "output" represents the contextual information, "input" represents the numerical vector assigned with the positional data and the index vector, "Wavelet" symbolizes gradual, undulating nature of the non-linear operation, while the linear transformation encapsulates the weighted aggregation of input features.

In the context of performance optimization and stabilization, a sub-layer stabilization technique that focuses on stabilizing individual sub-layers of the data converter layers 302 is employed. The sub-layer stabilization technique offers significant advantages in enhancing performance and reducing execution or processing time of the linguistic model 228. By maintaining stability of each sub-layer independently, the sub-layer stabilization technique ensures that the linguistic model 228 remains robust and efficient, even when subjected to varying input scales. The sub-layer stabilization technique provides granular control through sub-layer stabilization. The sub-layer stabilization technique of stabilizing each sub-layer individually provides a granular level of control. Granular level of control in the sub-layer stabilization technique allows for precise management of individual sub-layers within the data converter layers 302, leading to improved performance and stability. For example, consider that the linguistic model 228 tasked with processing medical text data. If one sub-layer is responsible for understanding medical terminology and encounters an unexpected increase in jargon or complex phrases, that sub-layer may exhibit fluctuations in output accuracy. In such as case, the granular control, stabilization measures may be applied specifically to the sub-layer, adjusting activation function or fine-tuning hyperparameters of the sub-layer to better handle the specialized vocabulary, without altering the other sub-layers that may be performing well with general language processing. Instead of addressing instability at level of the entire linguistic model 228, the sub-layer stabilization technique targets sources of instability at a more localized level. The sources of instability refer to factors, for example, data variability, overfitting, gradient problems, parameter misalignment, and/or the like. By treating each sub-layer as an independent unit, stabilization measures are applied directly to the sub-layers, ensuring that any fluctuations or variations within a sub-layer are managed locally, without propagating instability to the entire linguistic model 228.

In the sub-layer stabilization technique, activations and parameters of each individual sub-layer are monitored. Stabilization is achieved through a series of steps designed to manage fluctuations and variations in the activations and parameters within each sub-layer. As the data (for example, verification input including the numerical vector and the index vector that is processed through the linguistic model 228) passes through each sub-layer, values of the activations and parameters of each individual sub-layer are constantly monitored. This continuous monitoring ensures that any deviations in the activations and the parameters are promptly addressed. The activations are adjusted to ensure they have a consistent scale. The adjustment involves centering the activations around zero and scaling the activations to a consistent range. The adjustment helps manage fluctuations in activations by normalizing the activations within each sub-layer. The normalization process ensures that the activations within each sub-layer maintain a consistent scale, further contributing to the stability and reliability of the system during processing. The normalization process may be performed using equation (3) given below: $Norm \left(b\right) = \sqrt{\frac{1}{n}} {\sum }_{i = 1}^{n} {b}^{2}$ equation (3) Where, "b" represents vector of values whose norm is being calculated. Each value in this vector contributes to the overall magnitude. Further, "n" is the number of elements in the vector "b", and "i" is index variable used in the summation, which iterates over each element of the vector from 1 to n.

Following the initial adjustment, adaptive re-scaling is performed using learned parameters associated with each sub-layer. The learned parameters are adaptive parameters that are trained during training of the linguistic model 228 and are used to adjust scaling and shifting of the activations. In particular, the learned parameters fine-tune normalization process by determining how much to adjust the activations based on characteristics of input data. The re-scaling step fine-tunes values of the activations by constraining the values of activations within a specific range to avoid excessive deviations of the activations. The learned parameters allow the linguistic model 228 to adjust the scale and shift based on the data, ensuring that the activations remain stable and within manageable bounds. The adjustment is made locally within each sub-layer, meaning that the changes are applied only to the specific sub-layer rather than the linguistic model 228. The sub-layer stabilization uses a localized approach to prevent fluctuations or variations from affecting the linguistic model 228, ensuring that each sub-layer handles data reliably. Once the activations are stabilized, the activations are passed on to the next sub-layer. The sub-layer stabilization technique ensures that the data associated with the activations remains consistent and reliable as it progresses through the linguistic model 228. By maintaining stable activations, each sub-layer may effectively manage different types and scales of input data, leading to more reliable and efficient performance.

Once the contribution vectors representing the contextual information are derived using the data converter layers 302, the components including the requested vector, the index vector, and the contribution vectors are fed into the linear classification layer 304. First, a dot product is computed between the requested vector and the index vector to generate an attention score matrix, which indicates how much attention each token may give to every other token in the input sequence. Attention scores of the attention score matrix represent a degree of emphasis each token places on other tokens in the input sequence. The attention scores obtained from the dot product may be referred to as raw attention scores. To make the attention scores more interpretable and usable, the attention scores may be normalized using a higher probability target function, for example, a softmax function. The softmax function converts the attention scores into probabilities ranging from "0 to 1". Such a normalization step is essential because it transforms the attention scores into a format where the attention scores sum to "1", allowing the attention scores to be interpreted as probabilities. In other words, the softmax function converts the raw attention scores into attention weights, which are probabilities that sum to "1". The attention weights reflect how much emphasis each word should place on other words in the input sequence of the tokens. Higher probabilities reflect greater emphasis on specific words or tokens in the input sequence when calculating an output vector, while lower probabilities indicate less relevance of the tokens or the words. The normalized probabilities, or attention weights, are then used to scale the contribution vectors. Scaling the contribution vectors may include multiplying each of the contribution vectors with the attention weights. This scaling adjusts contribution of each contribution vector according to its relevance as determined by the attention weights. The weighted contribution vectors are aggregated to produce the output vector, which encapsulates the contextual information derived from the input sequence of the tokens.

Following the generation of the output vector, the output vector undergoes a final transformation through one or more additional data processing layers (not shown in FIG. 3). The additional data processing layer converts the contextually enriched vector (e.g., the output vector) into a format suitable for prediction of the answers 308. Therefore, a final phase involves applying a linear classifier along with another higher probability target function to generate probabilities over the vocabulary. The final transformation transforms the output vector into a predicted sequence. The linguistic model 228 integrates freshly generated outputs into its input list, continuing decoding process iteratively until a specific token indicating completion of the sequence is generated. In short, a final answer of the answers 308 is generated through a series of steps that include transforming the output vector, applying a linear classifier and softmax function, selecting the most probable tokens, and iteratively generating a sequence until completion. Each step refines and builds upon the previous outputs to produce a coherent and contextually accurate response or result based on the input.

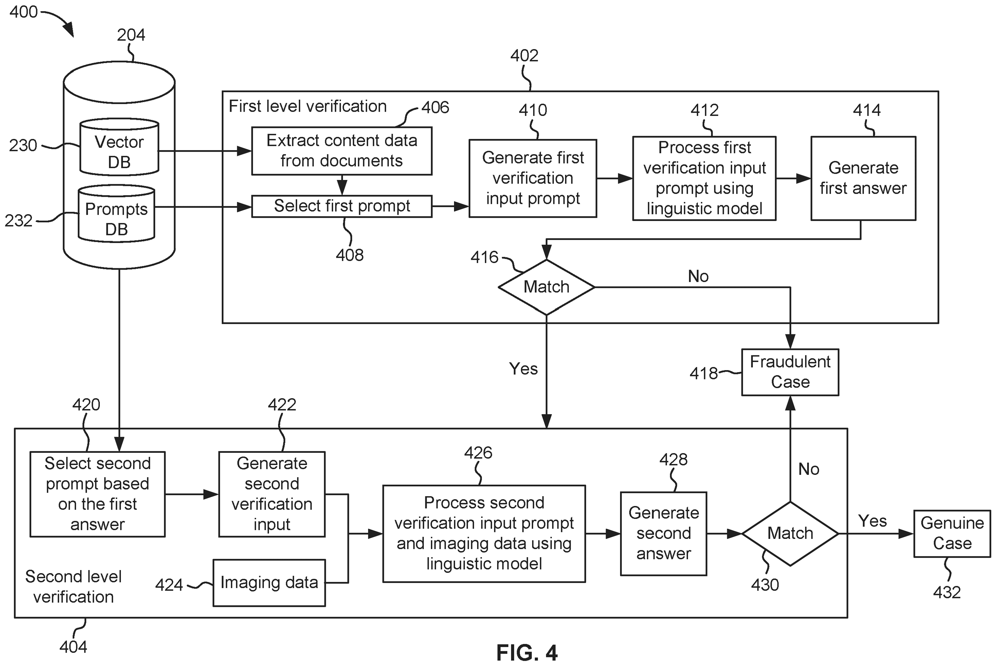

FIG. 4 illustrates detailed process flow 400 for verifying fulfillment requests or insurance claims, in accordance with implementations of the present disclosure. FIG. 4 is explained in conjunction with FIGs. 1-3.

The process flow 400 includes a first level verification 402 and a second level verification 404 to verify authenticity of an aspect of various aspects of a fulfillment request. Examples of the aspects may include, but are not limited to, billing and payment information, a medical procedure, patient information, procedure and diagnosis codes, user credentials, and/or the like. At the first level verification 402, the process flow 400 includes extracting 406 content data from documents related to the fulfillment request. The documents are stored in the vector DB 230. The documents include, but are not limited to, pharmacy bills, doctors' reports, and the like. The process flow 400 includes selecting 408 a first prompt based on the extracted content data. Further, the process flow 400 includes generating 410 a first verification input prompt based on the extracted content data and the first prompt selected from the prompts DB 232.

The process flow 400 includes processing 412 the first verification input prompt using the linguistic model 228. The process flow 400 includes generating 414 an output including a first answer using the linguistic model 228. Generation 414 of the first answer using the linguistic model 228 is already explained in detail in conjunction with FIG. 2 and FIG. 3. Once the first answer is generated, the process flow 400 includes matching 416 the first answer with the extracted content data. The extracted content data corresponds to various fields of the documents within the vector DB 230. In case the first answer fails to match with the content data, the fulfillment request may be labeled as a fraudulent case 418 which may be rendered to the external device of an entity (for example, a user, an administrator, an individual, a person working with an insurance company, an insurance policy holder, and/or the like). Alternatively, when the first answer is matched with the content data, the fulfillment request may be considered as genuine claim 432 at the first level verification 402, and the first answer is processed further for the second level verification 404.

For example, a first similarity score may be determined based on the first answer and the content data. To generate the first similarity score, one of a Cosine similarity technique, a Jaccard similarity technique, a Euclidean Distance technique, a Manhattan Distance technique, and/or the like, may be used. The first similarity score may depict a similarity between the first answer and the content data. The first similarity score may be compared with a first predefined threshold. The first threshold may be predefined by an insurance company or based on a type of fulfillment request. In an example, the first predefined threshold may be 90%. When the first similarity score is below the first predefined threshold value (e.g., 90%), it may be considered that the first answer fails to match with the content data. Thereby, the associated fulfillment request may be labeled as the fraudulent case 418. Alternatively, when the first similarity score is equal or above the first predefined threshold value (e.g., 90%), it may be considered that the first answer matches with the content data. Thereby, the fulfillment request may be considered as the genuine claim 432.

At the second level verification 404, the process flow 400 includes selecting 420 a second prompt based on the first answer. Further, the process flow 400 includes generating 422 a second verification input prompt based on the first answer and the second prompt. The process flow 400 includes extracting imaging data 424 associated with the content data. The imaging data may include, for example, CT scans and X-rays of a patient who has raised the fulfillment request.

Once the second verification input prompt is generated 422 and the imaging data is extracted 424, the process flow 400 proceeds to processing 426 the second verification input prompt using the linguistic model 228. The process flow 400 includes generating 428 an output including a second answer based on the second verification input prompt and the imaging data, using the linguistic model 228. Generation 428 of the second answer using the linguistic model 228 is already explained in detail in conjunction with FIG. 2 and FIG. 3. Further, the process flow 400 includes matching 430 the second answer with the first answer, the imaging data, and/or the content data. In case the second answer matches the first answer, the imaging data, and/or the content data, the fulfillment request may be labeled as a genuine case 432. Otherwise, if the second answer does not match with the first answer, the imaging data, and/or the content data, the fulfillment request may be labeled as the fraudulent case 418.

For example, a second similarity score may be determined based on the second answer, and the content data, the first answer, and the imaging data. To generate the second similarity score, one of a Cosine similarity technique, a Jaccard similarity technique, a Euclidean Distance technique, a Manhattan Distance technique, and/or the like, may be used. The second similarity score may depict a similarity between the second answer and the content data, the first answer, and/or the imaging data. The second similarity score may be compared with a second predefined threshold. The second threshold may be predefined by an insurance company or based on a type of fulfillment request. In an example, the second predefined threshold may be 80%. It should be noted that the first and second predefined thresholds may be same or different. When the second similarity score is below the second pre-defined threshold (e.g., 80%), it is considered as the second answer does not match with the first answer, the imaging data, and/or the content data. Thereby, the associated fulfillment request may be labeled as the fraudulent case 418. These results (e.g., the fraudulent case 418 or the genuine case 432) may be rendered to the external device of the entity (e.g., a user, an administrator, an individual, a person working with an insurance company, an insurance policy holder, and/or the like). When the second similarity score is equal to or above the second pre-defined threshold (e.g., 80%), it is considered as the second answer matches with the first answer, the imaging data, and/or the content data. Thereby, the associated fulfillment request may be labeled as the genuine case 432.

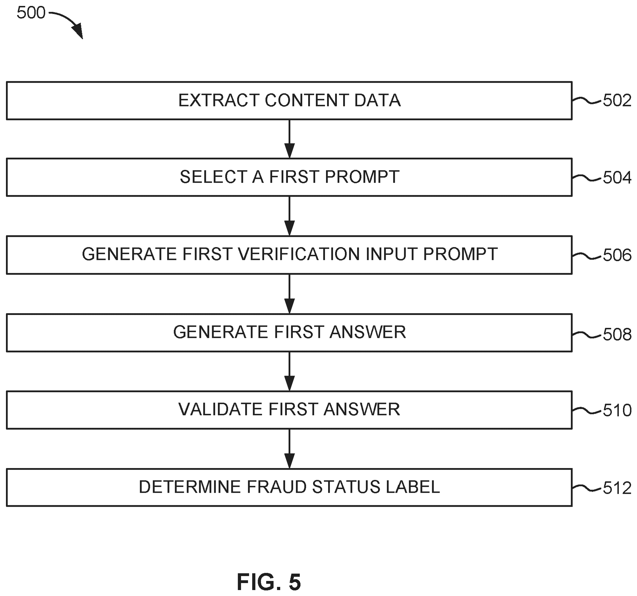

FIG. 5 is a flow diagram that presents an example method 500 for verifying fulfillment requests, in accordance with implementations of the present disclosure. In some implementations, the method 500 may be executed within the fraud identification system 114 and by the one or more processors 206 (shown in FIG. 2) using modules of the memory 208 (shown in FIG. 2). FIG. 5 is explained in conjunction with FIGs. 1-4.

The method 500 includes extracting 502 content data from a plurality of documents related to a fulfillment request (e.g., an insurance claim). The fulfillment request may be received from an entity through a respective external device (e.g., the external devices 102-104). The entity may include, but is not limited to, a user, an administrator, an individual, a person working with an insurance company, an insurance policy holder, and/or the like. For example, the entity may be an individual that submits the fulfillment request. In an example, during a first level of verification, upon receiving the fulfillment request, the content data may be extracted from a collection of documents related to the fulfillment request and stored in the vector DB 230 within the domain DB 204.

The method 500 further includes selecting 504 a first prompt from a plurality of prompts stored in the prompts DB 232, based upon the extracted content data. Once the content data is extracted from the documents related to the fulfillment request, the content data may be used to determine which prompt from a variety of prompts stored in the prompts DB 232 is most suitable for a given context. The selection of the most suitable prompt is already explained in detail in conjunction with FIG. 2. The prompts DB 232 which includes prompt templates and context-specific cues may be accessed. Each prompt is designed to elicit specific types of responses from the linguistic model 228, tailored to different scenarios or information needs. The extracted content data may be analyzed to understand context and requirements of the fulfillment request. Based on this analysis, the stored prompts may be evaluated to find one prompt that best aligns with the extracted content data. Selection of the prompt involves matching key elements from the content data with the characteristics and objectives of the prompts in the prompts DB 232. The prompt that may guide the linguistic model 228 to generate a response that is accurate, relevant, and contextually appropriate, may be selected.

The method 500 includes generating 506, based at least in part upon the extracted content data and based at least in part upon the selected prompt, a first verification input prompt. The method 500 further includes generating 508, using the linguistic model 228, a first answer based upon the first verification input prompt. The linguistic model 228 includes a plurality of data converter layers 302 and a linear classification layer 304. A numerical vector corresponding to each token in the content data, or the first verification input prompt may be generated using an embedding technique. In other words, a numerical representation for each token is generated, making it suitable for further processing. In addition to generating the numerical vector, location data may be assigned to each numerical vector based upon a position of each token in a sequence of the content data or the verification input prompt. By incorporating this positional information, an order and a structure of the tokens are maintained, which is important for accurately capturing the context of the content data. With the numerical vector and their associated location data, the data converter layers 302 of the linguistic model 228 is utilized to capture contextual information from the content data based upon the location data corresponding to each numerical vector. Capturing the contextual information involves understanding how tokens relate to one another based on their positions and the surrounding context. The linguistic model 228 interprets these relationships to build a comprehensive understanding of the content data. Further, the linear classification layer 304 of the linguistic model 228 may be utilized to generate a first answer based upon the captured contextual information. In other words, insights gained from the contextual information may be used to generate a coherent and contextually appropriate response (e.g., the first answer). The contextual information is integrated into a representation vector based upon contextual information of neighboring tokens in the sequence of the content data.

The method 500 includes validating 510 the first answer generated using the linguistic model 228 by comparing the first answer with the extracted content data. The validation may be either a successful validation or an unsuccessful validation. For example, if a match is found between the first answer and the extracted content, the validation is successful validation. Otherwise, when the first answer does not match to the extracted content data, the validation may be unsuccessful validation. In some implementations, a first similarity score may be generated based on the first answer and the content data, which may be then compared with a first predefined threshold value. To generate the first similarity score, one of a Cosine similarity technique, a Jaccard similarity technique, a Euclidean Distance technique, a Manhattan Distance technique, and/or the like, may be used. If the first similarity score is above or equal to the first predefined threshold value, the validation is successful. Otherwise, when the first similarity score is below the first predefined threshold value, the validation is unsuccessful.

The method 500 includes determining 512, based upon validation of the first answer, a fraud status label of the fulfillment request. For example, if the validation is unsuccessful, the fraud status label of the fulfillment request may be determined as a fraudulent fulfillment request. In other words, when the first answer fails to match with extracted content data, the fraud status label of the fulfillment request may be fraudulent fulfillment request. Alternatively, if the validation is successful, the fraud status label of the fulfillment request may be determined as a genuine fulfillment request. In other words, when the first answer matches with extracted content data, the fraud status label of the fulfillment request may be genuine fulfillment request.

In some implementations, when the validation of the first answer is successful and the fraud status label of the fulfillment request is determined as the genuine fulfillment request, the method 500 includes performing a second level of verification. To perform the second level of verification, initially, the method 500 includes selecting a second prompt from the plurality of prompts stored in the prompts DB 232, based upon the first answer that is validated to match with the extracted content data. Once the second prompt is selected, the method 500 includes generating a second verification input prompt based upon the first answer and the second prompt. Further, the method 500 includes processing the second verification input prompt along with imaging data associated with the content data using the linguistic model 228 to generate a second answer. The method 500 includes validating the second answer by comparing the second answer with the extracted content data, the imaging data, and/or the first answer. The method 500 includes determining a fraud status label of the fulfillment request based upon validation of the second answer. The fraud status label of the fulfillment request is determined as a fraudulent fulfillment request upon determining that the second answer failed to match with the extracted content data, imaging data and/or the first answer. Alternatively, the fraud status label of the fulfillment request is determined as a genuine fulfillment request upon determining that the second answer matches with the extracted content data, imaging data and/or the first answer. The validation of the second answer and the determination of the fraud status label is performed in a similar way as performed during the first level of verification.

By way of an example, consider a scenario of processing a medical insurance claim. Initially, content data is extracted from a variety of documents related to the medical insurance claim. These documents include an insurance claim form, medical reports, hospital bills, and payment receipts. For example, key details such as date of the hospital visit, medical procedures performed, total cost of treatment, and personal information of a respective patient are extracted. The extracted content data is stored in the vector DB 230, preparing it for further analysis. Once the content data is extracted, an appropriate prompt from a set of predefined prompts stored in the prompts DB 232 is selected. For example, a prompt may be designed to evaluate legitimacy of reported medical procedures and associated costs. The prompt may instruct to verify if the procedures and costs align with industry standards and previous claims. By analyzing the extracted content data, the prompt which is the best suited to assess the authenticity of the medical insurance claim may be selected. Using the selected prompt, a first verification input prompt that combines the extracted content data with the specific query from the selected prompt may be generated. For example, when the content data may include "date of the hospital visit: June 15, 2024", "procedure performed: Laparoscopic Gastric Bypass", "total cost of treatment: $25,000", receipt of payment and hospital bill". The selected prompt may include "review the listed medical procedures in the claim and compare them against industry standards and typical billing practices. Verify if the procedures mentioned are commonly performed for the reported diagnosis and if the associated costs are reasonable". In such a case, the first verification input prompt may be "Does the costing '$25,000', for 'Laparoscopic Gastric Bypass' procedure align with industry standards and typical billing practices?"

The linguistic model 228 then processes this verification input prompt to generate a first answer. The linguistic model 228 may generate numerical vectors for each token in the content data and assigns location data to maintain order and structure of the tokens. This allows the linguistic model 228 to capture and interpret contextual relationships between the tokens, providing a comprehensive understanding of details of the medical insurance claim. For example, if the medical insurance claim reports a high-cost, rare medical procedure, the linguistic model 228 may flag this as potentially suspicious. The first answer generated by the linguistic model 228 is then validated by comparing the first answer to the extracted content data. The similarity score is computed to measure how well the first answer aligns with the content data. If this score meets or exceeds a predefined threshold, the validation is considered successful. For example, if the reported procedures and costs are consistent with standard practices, the medical insurance claim is validated as genuine. If there are significant discrepancies, such as unusually high costs or incongruent procedures, the validation is unsuccessful. Based on the validation, a fraud status label may be assigned to the medical insurance claim. If the first answer is consistent with the content data and industry standards, the medical insurance claim is labeled as a "genuine fulfillment request." However, if the first answer does not match the extracted content data adequately, the claim is labeled as a "fraudulent fulfillment request."

If the claim passes the initial validation and is labeled as genuine, a second level of verification is conducted to ensure authenticity of the medical insurance claim further. In the second level of verification, a second prompt from the prompts DB 232 may be selected to examine additional details of the medical insurance claim. For example, the second prompt may focus on verifying the authenticity of the imaging data, such as a CT scan or X-ray images, and matching them with the billing data and other claim details. A second verification input prompt is generated using the second prompt and the validated first answer. The linguistic model 228 processes the second verification input prompt alongside the imaging data, which includes the CT scan or X-ray images, to generate a second answer. The second answer is then validated by comparing it with the extracted content data, the imaging data, and/or the first answer. If the validation of the second answer is successful and all details corroborate, the medical insurance claim remains classified as a "genuine fulfillment request." If discrepancies are found during this second verification, such as inconsistencies between the imaging data and the claim details, the medical insurance claim may be reclassified as a "fraudulent fulfillment request."

Implementations of the present disclosure provide technical solutions to multiple technical problems that arise in the context of identification of fraudulent fulfillment requests such as, insurance claims. The model trainer 224 utilizes POAS that helps the linguistic model 228 to learn a specific task while also improving the generated preferred response. The POAS provides better results than other tunning techniques because other tuning techniques make the linguistic model 228 to generate unwanted answers compared to preferred ones. Further, the linguistic model 228 described in the disclosure is trained based on training dataset related to a specific domain. For example, the linguistic model 228 may be trained with a specific focus on medical question-answering (medQA) training dataset. The MedQA dataset is meticulously curated to encompass a wide array of medical scenarios, questions, and answers, ensuring comprehensive coverage of medical knowledge. The MedQA dataset includes diverse medical cases, clinical guidelines, research papers, patient inquiries, and expert responses. Focusing the training dataset on medical question-answering allows the linguistic model 228 to more effectively understand and produce accurate, contextually appropriate responses to medical inquiries. The MedQA dataset enables the linguistic model 228 to learn variations of medical terminology, diagnostic criteria, treatment options, and subtleties of patient communication. As a result, the linguistic model 228 adepts to provide precise and reliable answers, which is critical in medical field where accuracy is paramount. Moreover, an impact of the MedQA training dataset on performance of the linguistic model 228 is significant. The ability of the linguistic model 228 to accurately interpret and respond to medical questions is directly enhanced by the quality and specificity of the training data. This targeted approach of using the MedQA training dataset for the linguistic model 228 not only improves the overall accuracy metrics of the linguistic model 228 but also ensures that the linguistic model 228 meets high standards required for medical applications. The MedQA training dataset is integral to the development of a highly accurate medical QA linguistic model. By leveraging a dataset rich in medical content, the linguistic model 228 achieves superior accuracy.

Implementations of the present disclosure employs the embedding technique to generate the numerical vectors. The embedding technique provides dynamic, context-sensitive representations, allowing for continuous updates based on neighboring tokens or entities. The use of the embedding technique enhances ability to capture complex relationships and subtle interactions within a multi-dimensional space, resulting in improved accuracy and adaptability to changing contexts. By facilitating a detailed understanding of data within the verification input, the embedding technique significantly enhances effectiveness in various applications requiring deep contextual awareness.

Implementations of the present disclosure further uses sub-layer stabilization technique that provides consistent performance across input scales, which means the sub-layer stabilization technique helps to maintain performance of the linguistic model 228 without requiring extensive adjustments for different input scales. By stabilizing each sub-layer of the data converter layers of the linguistic model 228 independently, the linguistic model 228 may handle different input scales more gracefully. The inherent stability of each sub-layer or data converter layer ensures that the overall system remains unaffected by input variations, eliminating need for extensive scaling adjustments. The sub-layer stabilization technique also enhances performance by reducing running time. Since stabilization is applied at the sub-layer level, stabilization may be performed more efficiently and with less computational overhead compared to techniques that stabilize entire data converter layers collectively or the whole linguist model 228. The stabilization technique minimizes amount of processing required at each step, leading to faster computations and more streamlined operations. Consequently, higher performance levels may be achieved with lower latency. The sub-layer stabilization has a potential to improve generalization of the linguistic model 228. By stabilizing sub-layers independently, the linguistic model 228 may better maintain its robustness across different data distributions, enhancing ability of the linguistic model 228 to generalize to unseen data or new data which is not handled previously.

The sub-layer stabilization technique is effective across various domains, including deep learning, signal processing, and control systems. In deep learning applications, models employing sub-layer stabilization shows improved convergence rates and higher accuracy. The sub-layer stabilization technique has led to more stable and reliable performance in systems handling fluctuating input signals. The sub-layer stabilization technique offers a more streamlined and robust solution for modern data processing challenges. By providing a precise and efficient means of stabilization, the technique enhances performance, reduces running time, and maintains system stability across varying input scales. The sub-layer stabilization technique has ability to improve both performance and generalization makes it a valuable tool in the optimization and stabilization of complex systems.

Additionally, implementations of the present disclosure use the hybrid activator or the hybrid activation function that addresses shortcomings of the traditional activation functions, such as Rectified Linear Unit (ReLU) and Sigmoid, by combining strengths of non-linear Wavelet component and linear transformations (dual operation). The non-linear Wavelet component captures smooth, gradual variations in the claim data or weights in the data converter layers 302, providing an ability for modeling complex, non-linear relationships that exist in real-world data. On the other hand, the linear transformation pathway (e.g., gating mechanism) aggregates input features in a weighted manner allowing for a more structured combination of information. The dual-operation approach allows the hybrid activator to offer a more robust and flexible mechanism for data representation, surpassing the capabilities of traditional activation functions. The hybrid activator significantly improves performance in various data analysis tasks, particularly those involving sequential data. Fields such as language processing and temporal analysis benefit greatly from the hybrid activator, as traditional activation functions often struggle with the dynamic nature of such datasets. The combination of non-linear transformations and linear transformations including adaptive gating mechanisms provides a more sophisticated tool for capturing the complexities of sequential patterns, leading to enhanced accuracy and efficiency. Element-wise integration of pathways within the hybrid activator further ensures a refined flow of information, allowing the linguistic model 228 to adapt dynamically to the specific requirements of the data being processed. This flexibility leads to superior performance and greater adaptability in handling complex data processing challenges. In summary, the hybrid activator represents a significant advancement over traditional activation functions by merging strengths of non-linear wavelet transformations with adaptive gating mechanisms, which enables more effective modeling of complex relationships and dynamic patterns in data, offering a powerful tool for modern data processing tasks.

The disclosure primarily elaborates on applications within the medical insurance field, its underlying principles and methodologies are adaptable to various other sectors involving both textual and complex imaging data. For example, in property insurance claims, the linguistic model 228 may be employed to verify claims related to damage from incidents like fires or floods by comparing repair quotes with damage photos to identify discrepancies or suspicious claims. Similarly, in travel insurance, the linguistic model 228 may verify medical bills, travel documents, and incident reports, checking for consistency between medical records and travel itineraries to detect potential fraud. Beyond insurance, applications of the present disclosure extend to financial services, where the linguistic model 228 may analyze transaction records against customer profiles to uncover anomalies, or to legal and compliance sectors, where it may verify documents and ensure adherence to regulatory standards. In identity verification, the linguistic model 228 may authenticate identity documents through facial recognition technology, while in retail and ecommerce, the linguistic model 228 may help to detect fraudulent returns and assess authenticity of customer feedback.

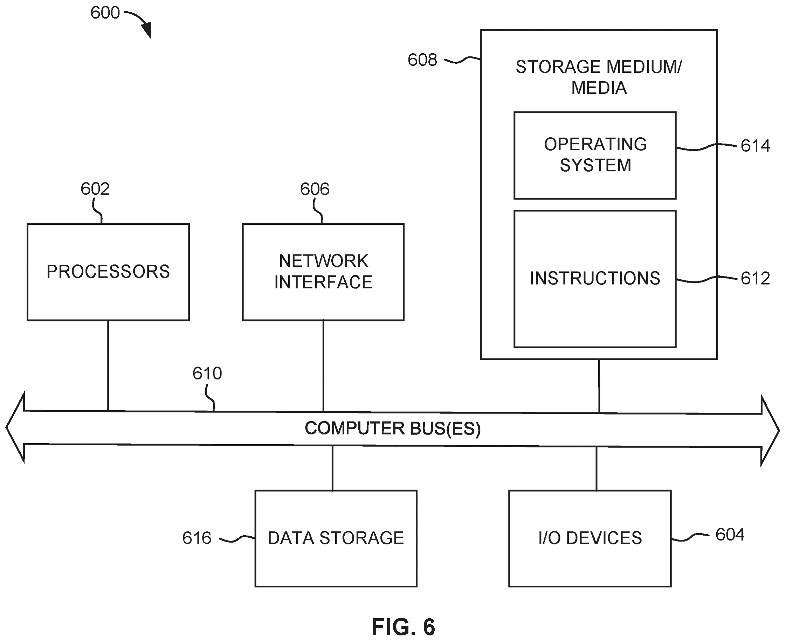

FIG. 6 illustrates a computer system 600 that may be used to implement the fraud identification system 114. More particularly, computing machines such as desktops, laptops, smartphones, tablets, and/or wearable electronic devices which may be used for identifying the fraud fulfillment requests or insurance claims and may have the structure of the computer system 600. The computer system 600 may include additional components not shown and that some of the process components described may be removed and/or modified. In another example, a computer system 600 may be deployed on external-cloud platforms such as cloud, internal corporate cloud computing clusters, organizational computing resources, and/or the like.

The computer system 600 includes processor(s) 602, such as a central processing unit, a controller, an application specific integrated circuit (ASIC), or another type of processing circuit, input/output devices (I/O) 604, such as a display, a mouse, a keyboard, etc., a network interface 606, such as a Local Area Network (LAN) interface, a wireless 802.11x interface, a 3G, 4G, 5G, or 6G mobile WAN or a WiMax WAN, and a computer-readable medium 608. Each of these components may be operatively coupled with each other via one or more computer bus(es) 610. The computer-readable medium 608 may be any suitable medium that participates in providing instructions to the processor(s) 602 for execution. For example, the computer-readable medium 608 may be non-transitory or non-volatile medium, such as a magnetic disk or solid-state non-volatile memory or volatile medium such as RAM. The instructions or modules stored on the computer-readable medium 608 may include machine-readable or machine-executable instructions or code 612 executed by the processor(s) 602 that cause the processor(s) 602 to perform the methods and functions of the fraud identification system 114.

The fraud identification system 114 may be implemented as software stored on a non-transitory computer-readable medium and executed by the processors 602. For example, the computer-readable medium 608 may store an operating system 614, such as MAC OS, MS WINDOWS, UNIX, or LINUX, and code 612 for the fraud identification system 114. The operating system 614 may be multi-user, multiprocessing, multitasking, multithreading, real-time, and the like. For example, during runtime, the operating system 614 and the code for the fraud identification system 114 are executed by the processor(s) 602.

The computer system 600 may include a data storage 616, which may include non-volatile data storage. The data storage 616 stores any data used or generated by the fraud identification system 114.

The network interface 606 connects the computer system 600 to external systems for example, via a LAN. Also, the network interface 606 may connect the computer system 600 to the Internet. For example, the computer system 600 may connect to web browsers and other external applications and systems via the network interface 606.

What has been described and illustrated herein is an example along with some of its variations. The terms, descriptions, and figures used herein are set forth by way of illustration only and are not meant as limitations.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (e.g., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term computing system encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor may receive instructions and data from a read only memory or a random-access memory or both. Elements of a computer may include a processor for performing instructions and one or more memory devices for storing instructions and data. Generally, a computer may also include, or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media (CRM) suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touch-pad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network (LAN) and a wide area network (WAN), e.g., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

## Claims

1. A computer-implemented method comprising:
extracting, by one or more processors of at least one computing device, content data from a plurality of documents related to a fulfillment request for processing a claim;
selecting, by the one or more processors, based upon the extracted content data, a first prompt from a plurality of prompts stored in a prompts database,
wherein the selection comprises:
analyzing the extracted content data to understand context and requirements of the fulfillment request,
performing, based on the analyzed extracted content data, a key-word based search, and
evaluating the plurality of prompts stored in the prompts database and identifying the first prompt that best aligns with the extracted content data;
generating, by the one or more processors, based at least in part upon the extracted content data and based at least in part upon the selected prompt, a first verification input prompt;
wherein the selected prompt is a prompt template, and
wherein the first verification input prompt is generated by combining the extracted content data with the selected prompt;
generating, by the one or more processors, using a linguistic model, a first answer based upon the first verification input prompt;
validating, by the one or more processors, the first answer generated using the linguistic model by comparing the first answer with the extracted content data to verify authenticity of an aspect of a plurality of aspects of the fulfillment request; and
determining, by the one or more processors of the at least one computing device, based upon validation of the first answer, a fraud status label of the fulfillment request,
wherein the fraud status label of the fulfillment request is a fraudulent fulfillment request when the first answer fails to match with the extracted content data, and
wherein the fraud status label of the fulfillment request is a genuine fulfillment request when the first answer matches with the extracted content data.

2. The computer-implemented method of claim 1, wherein the fraud status label of the fulfillment request is determined as a fraudulent fulfillment request upon determining the first answer failed to match with extracted content data.

3. The computer-implemented method of claim 1, further comprising:
selecting, by the one or more processors of the at least one computing device, based upon the first answer that is validated to match with the extracted content data, a second prompt from the plurality of prompts stored in the prompts database;
generating, by the one or more processors of the at least one computing device, based at least in part upon the first answer, a second verification input prompt;
providing, by the one or more processors of the at least one computing device, the second verification input prompt and imaging data associated with the extracted content data, to the linguistic model;
validating, by the one or more processors of the at least one computing device, a second answer by comparing the second answer with the extracted content data and/or the first answer, wherein the second answer is generated using the linguistic model in response to the second verification input prompt and the imaging data; and
determining, by the one or more processors of the at least one computing device, based upon validation of the second answer, a fraud status label of the fulfillment request;
wherein the fraud status label of the fulfillment request is determined as a fraudulent fulfillment request upon determining the second answer failed to match with the extracted content data and/or the first answer.

4. The computer-implemented method of any one of the preceding claims, wherein generating, using the linguistic model, the first answer based upon the first verification input prompt comprises:
generating a numerical vector corresponding to each token in the content data;
assigning location data to each numerical vector based upon a position of each token in a sequence of the content data;
capturing contextual information from the content data based upon the location data corresponding to each numerical vector; and
generating the first answer based upon the captured contextual information.

5. The computer-implemented method of any one of the preceding claims, wherein the linguistic model includes a plurality of data converter layers for capturing the contextual information and a linear classification layer for generating the first answer based on the contextual information;
wherein each of the plurality of data converter layers comprises a data representation layer, a positional encoding layer, and a multi-head focus layer.

6. The computer-implemented method of any one of the preceding claims, wherein capturing the contextual information comprises integrating the contextual information into a representation vector based upon contextual information of neighboring tokens in the sequence of the content data.

7. A system comprising:
at least one memory storing instructions; and
at least one processor communicatively coupled with the at least one memory, wherein the at least one processor executes the instructions to perform operations comprising:
extracting content data from a plurality of documents related to a fulfillment request for processing a claim;
selecting, based upon the extracted content data, a first prompt from a plurality of prompts stored in a prompts database,
wherein the selection comprises:
analyzing the extracted content data to understand context and requirements of the fulfillment request,
performing, based on the analyzed extracted content data, a key-word based search, and
evaluating the plurality of prompts stored in the prompts database and identifying the first prompt that best aligns with the extracted content data;
generating, based at least in part upon the extracted content data and based at least in part upon the selected prompt, a first verification input prompt;
wherein the selected prompt is a prompt template, and
wherein the first verification input prompt is generated by combining the extracted content data with the selected prompt;
generating, using a linguistic model, a first answer based upon the first verification input prompt;
validating the first answer generated using the linguistic model by comparing the first answer with the extracted content data, to verify authenticity of an aspect of a plurality of aspects of the fulfillment request; and
determining, based upon validation of the first answer, a fraud status label of the fulfillment request,
wherein the fraud status label of the fulfillment request is a fraudulent fulfillment request when the first answer fails to match with the extracted content data, and
wherein the fraud status label of the fulfillment request is a genuine fulfillment request when the first answer matches with the extracted content data.

8. The system of claim 7, wherein the fraud status label of the fulfillment request is determined as a fraudulent fulfillment request upon determining the first answer failed to match with extracted content data.

9. The system of claim 7, wherein the operations further comprising:
selecting, based upon the first answer that is validated to match with the extracted content data, a second prompt from the plurality of prompts stored in the prompts database;
generating, based at least in part upon the first answer, a second verification input prompt;
providing, the second verification input prompt and imaging data associated with the extracted content data, to the linguistic model;
validating, a second answer by comparing the second answer with the extracted content data and/or the first answer, wherein the second answer is generated using the linguistic model in response to the second verification input prompt and the imaging data; and
determining, based upon validation of the second answer, a fraud status label of the fulfillment request;
wherein the fraud status label of the fulfillment request is determined as a fraudulent fulfillment request upon determining the second answer failed to match with the extracted content data and/or the first answer.

10. The system of any one of claims 7 to 9, wherein the operations further comprising:
generating a numerical vector corresponding to each token in the content data;
assigning location data to each numerical vector based upon a position of each token in a sequence of the content data;
capturing contextual information from the content data based upon the location data corresponding to each numerical vector; and
generating the first answer based upon the captured contextual information.

11. The system of any one of claims 7 to 10, wherein the linguistic model includes a plurality of data converter layers for capturing the contextual information and a linear classification layer for generating the first answer based on the contextual information;
wherein each of the plurality of data converter layers comprises a data representation layer, a positional encoding layer, and a multi-head focus layer.

12. The system of any one of claims 7 to 11, wherein capturing the contextual information comprises integrating the contextual information into a representation vector based upon contextual information of neighboring tokens in the sequence of the content data.

13. A non-transitory computer-readable media (CRM) comprising instructions stored thereon, which, when executed by at least one processor of at least one computing device, cause the computing device to perform operations comprising:
extracting content data from a plurality of documents related to a fulfillment request for processing a claim;
selecting, based upon the extracted content data, a first prompt from a plurality of prompts stored in a prompts database,
wherein the selection comprises:
analyzing the extracted content data to understand context and requirements of the fulfillment request,
performing, based on the analyzed extracted content data, a key-word based search, and
evaluating the plurality of prompts stored in the prompts database and identifying the first prompt that best aligns with the extracted content data;
generating, based at least in part upon the extracted content data and based at least in part upon the selected prompt, a first verification input prompt;
wherein the selected prompt is a prompt template, and
wherein the first verification input prompt is generated by combining the extracted content data with the selected prompt;
generating, using a linguistic model, a first answer based upon the first verification input prompt;
validating the first answer generated using the linguistic model by comparing the first answer with the extracted content data to verify authenticity of an aspect of a plurality of aspects of the fulfillment request; and
determining, based upon validation of the first answer, a fraud status label of the fulfillment request,
wherein the fraud status label of the fulfillment request is a fraudulent fulfillment request when the first answer fails to match with the extracted content data, and
wherein the fraud status label of the fulfillment request is a genuine fulfillment request when the first answer matches with the extracted content data.

14. The non-transitory CRM of claim 13, wherein the operations further comprising:
selecting, based upon the first answer that is validated to match with the extracted content data, a second prompt from the plurality of prompts stored in the prompts database;
generating, based at least in part upon the first answer, a second verification input prompt;
providing the second verification input prompt and imaging data of the extracted content data, to the linguistic model;
validating a second answer by comparing the second answer with the extracted content data and/or the first answer, wherein the second answer is generated using the linguistic model in response to the second verification input prompt and the imaging data of the extracted content data; and
determining, based upon validation of the second answer, a fraud status label of the fulfillment request;

15. The non-transitory CRM of claim 13 or 14, wherein the fraud status label of the fulfillment request is determined as a fraudulent fulfillment request upon determining the first answer failed to match with extracted content data, or upon determining the second answer failed to match with the extracted content data and/or the first answer;
and/or
wherein the operations further comprising:
generating a numerical vector corresponding to each token in the content data;
assigning location data to each numerical vector based upon a position of each token in a sequence of the content data;
capturing contextual information from the content data based upon the location data corresponding to each numerical vector, wherein the linguistic model includes a plurality of data converter layers for capturing contextual information; and
generating the first answer based upon the captured contextual information, wherein the linguistic model includes a linear classification layer for generating the first answer based on the contextual information.

## Patentansprüche

1. Ein computerimplementiertes Verfahren, umfassend:
Extrahieren, durch einen oder mehrere Prozessoren mindestens einer Rechenvorrichtung, von Inhaltsdaten aus einer Vielzahl von Dokumenten, die sich auf eine Erfüllungsanfrage zur Bearbeitung eines Anspruchs beziehen;
Auswählen, durch den einen oder die mehrere Prozessoren, auf der Grundlage der extrahierten Inhaltsdaten, eines ersten Prompts aus einer Vielzahl von Prompts, die in einer Prompt-Datenbank gespeichert sind,
wobei die Auswahl Folgendes umfasst:
Analysieren der extrahierten Inhaltsdaten, um den Kontext und die Anforderungen der Erfüllungsanfrage zu verstehen,
Durchführen, auf der Grundlage der analysierten extrahierten Inhaltsdaten, einer schlüsselwortbasierten Suche, und
Auswerten der Vielzahl von Prompts, die in der Prompt-Datenbank gespeichert sind, und Identifizieren des ersten Prompts, der am besten mit den extrahierten Inhaltsdaten übereinstimmt;
Erzeugen, durch den einen oder die mehreren Prozessoren, zumindest teilweise basierend auf den extrahierten Inhaltsdaten und zumindest teilweise basierend auf dem ausgewählten Prompt, eines ersten Verifizierungs-Eingabeprompts;
wobei der ausgewählte Prompt eine Prompt-Vorlage ist, und
wobei der erste Verifizierungs-Eingabeprompt durch Kombinieren der extrahierten Inhaltsdaten mit dem ausgewählten Prompt erzeugt wird;
Erzeugen, durch den einen oder die mehreren Prozessoren, unter Verwendung eines linguistischen Modells, einer ersten Antwort auf der Grundlage des ersten Verifizierungs-Eingabeprompts;
Validieren, durch den einen oder die mehreren Prozessoren, der unter Verwendung des linguistischen Modells erzeugten ersten Antwort durch Vergleichen der ersten Antwort mit den extrahierten Inhaltsdaten, um die Authentizität eines Aspekts aus einer Vielzahl von Aspekten der Erfüllungsanfrage zu überprüfen; und
Bestimmen, durch den einen oder die mehrere Prozessoren der mindestens einen Rechenvorrichtung, auf der Grundlage der Validierung der ersten Antwort, einer Betrugsstatuskennzeichnung der Erfüllungsanfrage,
wobei die Betrugsstatuskennzeichnung der Erfüllungsanfrage eine betrügerische Erfüllungsanfrage ist, wenn die erste Antwort nicht mit den extrahierten Inhaltsdaten übereinstimmt, und
wobei die Betrugsstatuskennzeichnung der Erfüllungsanfrage eine echte Erfüllungsanfrage ist, wenn die erste Antwort mit den extrahierten Inhaltsdaten übereinstimmt.

2. Das computerimplementierte Verfahren nach Anspruch 1, wobei die Betrugsstatuskennzeichnung der Erfüllungsanfrage als betrügerische Erfüllungsanfrage bestimmt wird, wenn bestimmt wird, dass die erste Antwort nicht mit den extrahierten Inhaltsdaten übereinstimmt.

3. Das computerimplementierte Verfahren nach Anspruch 1, ferner umfassend:
Auswählen, durch den einen oder die mehreren Prozessoren der mindestens einen Rechenvorrichtung, auf der Grundlage der ersten Antwort, die als mit den extrahierten Inhaltsdaten übereinstimmend validiert wurde, eines zweiten Prompts aus der Vielzahl von in der Prompt-Datenbank gespeicherten Prompts;
Erzeugen, durch den einen oder die mehreren Prozessoren der mindestens einen Rechenvorrichtung, zumindest teilweise auf der Grundlage der ersten Antwort, eines zweiten Verifizierungs-Eingabeprompts;
Bereitstellen, durch den einen oder die mehreren Prozessoren der mindestens einen Rechenvorrichtung, des zweiten Verifizierungs-Eingabeprompts und von Bilddaten, die den extrahierten Inhaltsdaten zugeordnet sind, für das linguistische Modell;
Validieren, durch den einen oder die mehreren Prozessoren der mindestens einen Rechenvorrichtung, einer zweiten Antwort durch Vergleichen der zweiten Antwort mit den extrahierten Inhaltsdaten und/oder der ersten Antwort, wobei die zweite Antwort erzeugt wird unter Verwendung des linguistischen Modells, als Reaktion auf den zweiten Verifizierungs-Eingabeprompts und auf die Bilddaten; und
Bestimmen, durch den einen oder die mehreren Prozessoren der mindestens einen Rechenvorrichtung, basierend auf der Validierung der zweiten Antwort, einer Betrugsstatus-Kennzeichnung der Erfüllungsanfrage;
wobei die Betrugsstatuskennzeichnung der Erfüllungsanfrage als betrügerische Erfüllungsanfrage bestimmt wird, wenn festgestellt wird, dass die zweite Antwort nicht mit den extrahierten Inhaltsdaten und/oder der ersten Antwort übereinstimmt.

4. Das computerimplementierte Verfahren nach irgendeinem der vorstehenden Ansprüche, wobei das Erzeugen, unter Verwendung des linguistischen Modells, der ersten Antwort auf der Grundlage des ersten Verifizierungs-Eingabeprompts Folgendes umfasst:
Erzeugen eines numerischen Vektors, der jedem Token in den Inhaltsdaten entspricht;
Zuweisen von Positionsdaten zu jedem numerischen Vektor auf der Grundlage einer Position jedes Tokens in einer Sequenz der Inhaltsdaten;
Erfassen von Kontextinformationen aus den Inhaltsdaten basierend auf den Positionsdaten, die jedem numerischen Vektor entsprechen; und
Erzeugen der ersten Antwort auf der Grundlage der erfassten Kontextinformationen.

5. Das computerimplementierte Verfahren nach irgendeinem der vorstehenden Ansprüche, wobei das linguistische Modell eine Vielzahl von Datenkonverter-Schichten zum Erfassen der Kontextinformationen, und eine lineare Klassifizierungsschicht zum Erzeugen der ersten Antwort auf der Grundlage der Kontextinformationen beinhaltet;
wobei jede der Vielzahl von Datenkonverter-Schichten eine Datenrepräsentationsschicht, eine Positionskodierungsschicht und eine Multi-Head-Fokus-Schicht beinhaltet.

6. Das computerimplementierte Verfahren nach irgendeinem der vorstehenden Ansprüche, wobei das Erfassen der Kontextinformationen das Integrieren der Kontextinformationen in einen Repräsentationsvektor auf der Grundlage von Kontextinformationen benachbarter Token in der Sequenz der Inhaltsdaten umfasst.

7. Ein System, umfassend:
mindestens einen Speicher, der Anweisungen speichert; und
mindestens einen Prozessor, der kommunikativ mit dem mindestens einen Speicher gekoppelt ist, wobei der mindestens eine Prozessor die Anweisungen ausführt, um Operationen durchzuführen, die Folgendes umfassen:
Extrahieren von Inhaltsdaten aus einer Vielzahl von Dokumenten, die sich auf eine Erfüllungsanfrage zur Bearbeitung eines Anspruchs beziehen;
Auswählen, auf der Grundlage der extrahierten Inhaltsdaten, eines ersten Prompts aus einer Vielzahl von Prompts, die in einer Prompt-Datenbank gespeichert sind,
wobei die Auswahl Folgendes umfasst:
Analysieren der extrahierten Inhaltsdaten, um den Kontext und die Anforderungen der Erfüllungsanfrage zu verstehen,
Durchführen, auf der Grundlage der analysierten extrahierten Inhaltsdaten, einer schlüsselwortbasierten Suche, und
Auswerten der Vielzahl von Prompts, die in der Prompt-Datenbank gespeichert sind, und Identifizieren des ersten Prompts, der am besten mit den extrahierten Inhaltsdaten übereinstimmt;
Erzeugen, zumindest teilweise basierend auf den extrahierten Inhaltsdaten und zumindest teilweise basierend auf dem ausgewählten Prompt, eines ersten Verifizierungs-Eingabeprompts;
wobei der ausgewählte Prompt eine Prompt-Vorlage ist, und
wobei der erste Verifizierungs-Eingabeprompt durch Kombinieren der extrahierten Inhaltsdaten mit dem ausgewählten Prompt erzeugt wird;
Erzeugen, unter Verwendung eines linguistischen Modells, einer ersten Antwort auf der Grundlage des ersten Verifizierungs-Eingabeprompts;
Validieren der unter Verwendung des linguistischen Modells erzeugten ersten Antwort durch Vergleichen der ersten Antwort mit den extrahierten Inhaltsdaten, um die Authentizität eines Aspekts aus einer Vielzahl von Aspekten der Erfüllungsanfrage zu überprüfen; und
Bestimmen, auf der Grundlage der Validierung der ersten Antwort, einer Betrugsstatuskennzeichnung der Erfüllungsanfrage,
wobei die Betrugsstatuskennzeichnung der Erfüllungsanfrage eine betrügerische Erfüllungsanfrage ist, wenn die erste Antwort nicht mit den extrahierten Inhaltsdaten übereinstimmt, und
wobei die Betrugsstatuskennzeichnung der Erfüllungsanfrage eine echte Erfüllungsanfrage ist, wenn die erste Antwort mit den extrahierten Inhaltsdaten übereinstimmt.

8. Das System nach Anspruch 7, wobei die Betrugsstatuskennzeichnung der Erfüllungsanfrage als betrügerische Erfüllungsanfrage bestimmt wird, wenn bestimmt wird, dass die erste Antwort nicht mit den extrahierten Inhaltsdaten übereinstimmt.

9. Das System nach Anspruch 7, wobei die Operationen ferner Folgendes umfassen:
Auswählen, auf der Grundlage der ersten Antwort, die als mit den extrahierten Inhaltsdaten übereinstimmend validiert wurde, eines zweiten Prompts aus der Vielzahl von in der Prompt-Datenbank gespeicherten Prompts;
Erzeugen, zumindest teilweise auf der Grundlage der ersten Antwort, eines zweiten Verifizierungs-Eingabeprompts;
Bereitstellen des zweiten Verifizierungs-Eingabeprompts und von Bilddaten, die den extrahierten Inhaltsdaten zugeordnet sind, für das linguistische Modell;
Validieren einer zweiten Antwort durch Vergleichen der zweiten Antwort mit den extrahierten Inhaltsdaten und/oder der ersten Antwort, wobei die zweite Antwort erzeugt wird unter Verwendung des linguistischen Modells, als Reaktion auf den zweiten Verifizierungs-Eingabeprompts und auf die Bilddaten; und
Bestimmen, basierend auf der Validierung der zweiten Antwort, einer Betrugsstatus-Kennzeichnung der Erfüllungsanfrage;
wobei die Betrugsstatuskennzeichnung der Erfüllungsanfrage als betrügerische Erfüllungsanfrage bestimmt wird, wenn festgestellt wird, dass die zweite Antwort nicht mit den extrahierten Inhaltsdaten und/oder der ersten Antwort übereinstimmt.

10. Das System nach irgendeinem der Ansprüche von 7 bis 9, wobei die Operationen ferner Folgendes umfassen:
Erzeugen eines numerischen Vektors, der jedem Token in den Inhaltsdaten entspricht;
Zuweisen von Positionsdaten zu jedem numerischen Vektor auf der Grundlage einer Position jedes Tokens in einer Sequenz der Inhaltsdaten;
Erfassen von Kontextinformationen aus den Inhaltsdaten basierend auf den Positionsdaten, die jedem numerischen Vektor entsprechen; und
Erzeugen der ersten Antwort auf der Grundlage der erfassten Kontextinformationen.

11. Das System nach irgendeinem der Ansprüche von 7 bis 10, wobei das linguistische Modell eine Vielzahl von Datenkonverter-Schichten zum Erfassen der Kontextinformationen, und eine lineare Klassifizierungsschicht zum Erzeugen der ersten Antwort auf der Grundlage der Kontextinformationen beinhaltet;
wobei jede der Vielzahl von Datenkonverter-Schichten eine Datenrepräsentationsschicht, eine Positionskodierungsschicht und eine Multi-Head-Fokus-Schicht beinhaltet.

12. Das System nach irgendeinem der Ansprüche von 7 bis 11, wobei das Erfassen der Kontextinformationen das Integrieren der Kontextinformationen in einen Repräsentationsvektor auf der Grundlage von Kontextinformationen benachbarter Token in der Sequenz der Inhaltsdaten umfasst.

13. Ein nicht-flüchtiges, computerlesbares Medium (*computer-readable media* - CRM), das darauf gespeicherte Anweisungen umfasst, die, wenn sie von mindestens einem Prozessor mindestens einer Rechenvorrichtung ausgeführt werden, die Rechenvorrichtung dazu veranlassen, folgende Operationen auszuführen:
Extrahieren von Inhaltsdaten aus einer Vielzahl von Dokumenten, die sich auf eine Erfüllungsanfrage zur Bearbeitung eines Anspruchs beziehen;
Auswählen, auf der Grundlage der extrahierten Inhaltsdaten, eines ersten Prompts aus einer Vielzahl von Prompts, die in einer Prompt-Datenbank gespeichert sind,
wobei die Auswahl Folgendes umfasst:
Analysieren der extrahierten Inhaltsdaten, um den Kontext und die Anforderungen der Erfüllungsanfrage zu verstehen,
Durchführen, auf der Grundlage der analysierten extrahierten Inhaltsdaten, einer schlüsselwortbasierten Suche, und
Auswerten der Vielzahl von Prompts, die in der Prompt-Datenbank gespeichert sind, und Identifizieren des ersten Prompts, der am besten mit den extrahierten Inhaltsdaten übereinstimmt;
Erzeugen, zumindest teilweise basierend auf den extrahierten Inhaltsdaten und zumindest teilweise basierend auf dem ausgewählten Prompt, eines ersten Verifizierungs-Eingabeprompts;
wobei der ausgewählte Prompt eine Prompt-Vorlage ist, und
wobei der erste Verifizierungs-Eingabeprompt durch Kombinieren der extrahierten Inhaltsdaten mit dem ausgewählten Prompt erzeugt wird;
Erzeugen, unter Verwendung eines linguistischen Modells, einer ersten Antwort auf der Grundlage des ersten Verifizierungs-Eingabeprompts;
Validieren der unter Verwendung des linguistischen Modells erzeugten ersten Antwort durch Vergleichen der ersten Antwort mit den extrahierten Inhaltsdaten, um die Authentizität eines Aspekts aus einer Vielzahl von Aspekten der Erfüllungsanfrage zu überprüfen; und
Bestimmen, auf der Grundlage der Validierung der ersten Antwort, einer Betrugsstatuskennzeichnung der Erfüllungsanfrage,
wobei die Betrugsstatuskennzeichnung der Erfüllungsanfrage eine betrügerische Erfüllungsanfrage ist, wenn die erste Antwort nicht mit den extrahierten Inhaltsdaten übereinstimmt, und
wobei die Betrugsstatuskennzeichnung der Erfüllungsanfrage eine echte Erfüllungsanfrage ist, wenn die erste Antwort mit den extrahierten Inhaltsdaten übereinstimmt.

14. Das nicht-flüchtige CRM nach Anspruch 13, wobei die Operationen ferner Folgendes umfassen:
Auswählen, auf der Grundlage der ersten Antwort, die als mit den extrahierten Inhaltsdaten übereinstimmend validiert wurde, eines zweiten Prompts aus der Vielzahl von in der Prompt-Datenbank gespeicherten Prompts;
Erzeugen, zumindest teilweise auf der Grundlage der ersten Antwort, eines zweiten Verifizierungs-Eingabeprompts;
Bereitstellen des zweiten Verifizierungs-Eingabeprompts und von Bilddaten, die den extrahierten Inhaltsdaten zugeordnet sind, für das linguistische Modell;
Validieren einer zweiten Antwort durch Vergleichen der zweiten Antwort mit den extrahierten Inhaltsdaten und/oder der ersten Antwort, wobei die zweite Antwort erzeugt wird unter Verwendung des linguistischen Modells, als Reaktion auf den zweiten Verifizierungs-Eingabeprompts und auf die Bilddaten der extrahierten Inhaltsdaten; und
Bestimmen, basierend auf der Validierung der zweiten Antwort, einer Betrugsstatus-Kennzeichnung der Erfüllungsanfrage;

15. Das nicht-flüchtige CRM nach Anspruch 13 oder 14, wobei die Betrugsstatuskennzeichnung der Erfüllungsanfrage als betrügerische Erfüllungsanfrage bestimmt wird, wenn festgestellt wird, dass die erste Antwort nicht mit den extrahierten Inhaltsdaten übereinstimmt, oder wenn festgestellt wird, dass die zweite Antwort nicht mit den extrahierten Inhaltsdaten und/oder der ersten Antwort übereinstimmt;
und/oder
wobei die Operationen ferner Folgendes umfassen:
Erzeugen eines numerischen Vektors, der jedem Token in den Inhaltsdaten entspricht;
Zuweisen von Positionsdaten zu jedem numerischen Vektor auf der Grundlage einer Position jedes Tokens in einer Sequenz der Inhaltsdaten;
Erfassen von Kontextinformationen aus den Inhaltsdaten basierend auf den Positionsdaten, die jedem numerischen Vektor entsprechen; wobei das linguistische Modell eine Vielzahl von Datenkonverter-Schichten zur Erfassung von Kontextinformationen beinhaltet; und
Erzeugen der ersten Antwort auf der Grundlage der erfassten Kontextinformationen, wobei das linguistische Modell eine lineare Klassifizierungsschicht zum Erzeugen der ersten Antwort auf der Grundlage der Kontextinformationen beinhaltet.

## Revendications

1. Un procédé mis en œuvre par ordinateur, comprenant :
l'extraction, par un ou plusieurs processeurs d'au moins un dispositif informatique, de données de contenu à partir d'une pluralité de documents liés à une demande d'exécution d'une demande d'indemnisation ;
la sélection, par le ou les processeurs, sur la base des données de contenu extraites, d'une première invite parmi une pluralité d'invites stockées dans une base de données d'invites,
sachant que ladite sélection comprend :
l'analyse des données de contenu extraites afin de comprendre le contexte et les exigences de la demande d'exécution,
la réalisation, sur la base des données de contenu extraites et analysées, d'une recherche par mots-clés, ainsi que
l'évaluation de la pluralité d'invites stockés dans la base de données d'invites, et l'identification de la première invite qui correspond le mieux aux données de contenu extraites ;
la génération, par le ou les processeurs, sur la base au moins en partie des données de contenu extraites et sur la base au moins en partie de l'invite sélectionnée, d'une première invite d'entrée de vérification ;
sachant que l'invite sélectionnée est un modèle d'invite, et
sachant que la première invite d'entrée de vérification est générée en combinant les données de contenu extraites avec l'invite sélectionnée ;
la génération, par le ou les processeurs et à l'aide d'un modèle linguistique, d'une première réponse basée sur la première invite d'entrée de vérification ;
la validation, par le ou les processeurs, de la première réponse générée à l'aide du modèle linguistique en comparant la première réponse aux données de contenu extraites afin de vérifier l'authenticité d'un aspect parmi une pluralité d'aspects de la demande d'exécution ; et
la détermination, par le ou les processeurs dudit au moins un dispositif informatique, sur la base de la validation de la première réponse, d'un libellé d'état de fraude de la demande d'exécution,
sachant que le libellé d'état de fraude de la demande d'exécution est une demande d'exécution frauduleuse lorsque la première réponse ne correspond pas aux données de contenu extraites, et
sachant que le libellé d'état de fraude de la demande d'exécution est à une demande d'exécution authentique lorsque la première réponse correspond aux données de contenu extraites.

2. Le procédé mis en œuvre par ordinateur d'après la revendication 1, sachant que le libellé d'état de fraude de la demande d'exécution est déterminé comme étant une demande d'exécution frauduleuse lorsqu'il est établi que la première réponse ne correspond pas aux données de contenu extraites.

3. Le procédé mis en œuvre par ordinateur d'après la revendication 1, comprenant en outre :
la sélection, par le ou les processeurs dudit au moins un dispositif informatique, sur la base de la première réponse dont la correspondance avec les données de contenu extraites a été validée, d'une deuxième invite parmi la pluralité d'invites stockées dans la base de données d'invites ;
la génération, par le ou les processeurs dudit au moins un dispositif informatique, sur la base au moins en partie de la première réponse, d'une deuxième invite d'entrée de vérification ;
la fourniture, par le ou les processeurs dudit au moins un dispositif informatique, de la deuxième invite d'entrée de vérification et de données d'imagerie associées aux données de contenu extraites, au modèle linguistique ;
la validation, par le ou les processeurs dudit au moins un dispositif informatique, d'une deuxième réponse en comparant la deuxième réponse aux données de contenu extraites et/ou à la première réponse, sachant que la deuxième réponse est générée à l'aide du modèle linguistique en réponse à la deuxième invite d'entrée de vérification et aux données d'imagerie ; et
la détermination, par le ou les processeurs dudit au moins un dispositif informatique, sur la base de la validation de la deuxième réponse, d'un libellé d'état de fraude de la demande d'exécution ;
sachant que le libellé d'état de fraude de la demande d'exécution est déterminé comme étant une demande d'exécution frauduleuse lorsqu'il est établi que la deuxième réponse ne correspond pas aux données de contenu extraites et/ou à la première réponse.

4. Le procédé mis en œuvre par ordinateur d'après l'une quelconque des revendications précédentes, sachant que la génération, à l'aide du modèle linguistique, de la première réponse sur la base de la première invite d'entrée de vérification comprend :
la génération d'un vecteur numérique correspondant à chaque token dans les données de contenu ;
l'attribution de données de position à chaque vecteur numérique sur la base de la position de chaque token dans une séquence des données de contenu ;
la capture d'informations contextuelles à partir des données de contenu sur la base des données de position correspondant à chaque vecteur numérique ; et
la génération de la première réponse sur la base des informations contextuelles capturées.

5. Le procédé mis en œuvre par ordinateur d'après l'une quelconque des revendications précédentes, sachant que le modèle linguistique inclut une pluralité de couches de conversion de données destinées à capturer les informations contextuelles, ainsi qu'une couche de classification linéaire destinée à générer la première réponse sur la base des informations contextuelles ;
sachant que chacune de la pluralité des couches de conversion de données comprend une couche de représentation de données, une couche de codage positionnel et une couche de focalisation multi-têtes.

6. Le procédé mis en œuvre par ordinateur d'après l'une quelconque des revendications précédentes, sachant que la capture des informations contextuelles comprend l'intégration des informations contextuelles dans un vecteur de représentation sur la base des informations contextuelles de tokens voisins dans la séquence des données de contenu.

7. Un système comprenant :
au moins une mémoire stockant des instructions ; et
au moins un processeur couplé de manière communicative à ladite au moins une mémoire, sachant que ledit au moins un processeur exécute les instructions pour effectuer des opérations comprenant :
l'extraction de données de contenu à partir d'une pluralité de documents liés à une demande d'exécution d'une demande d'indemnisation ;
la sélection, sur la base des données de contenu extraites, d'une première invite parmi une pluralité d'invites stockées dans une base de données d'invites,
sachant que ladite sélection comprend :
l'analyse des données de contenu extraites afin de comprendre le contexte et les exigences de la demande d'exécution,
la réalisation, sur la base des données de contenu extraites et analysées, d'une recherche par mots-clés, ainsi que
l'évaluation de la pluralité d'invites stockés dans la base de données d'invites, et l'identification de la première invite qui correspond le mieux aux données de contenu extraites ;
la génération, sur la base au moins en partie des données de contenu extraites et sur la base au moins en partie de l'invite sélectionnée, d'une première invite d'entrée de vérification ;
sachant que l'invite sélectionnée est un modèle d'invite, et
sachant que la première invite d'entrée de vérification est générée en combinant les données de contenu extraites avec l'invite sélectionnée ;
la génération, à l'aide d'un modèle linguistique, d'une première réponse basée sur la première invite d'entrée de vérification ;
la validation de la première réponse générée à l'aide du modèle linguistique en comparant la première réponse aux données de contenu extraites afin de vérifier l'authenticité d'un aspect parmi une pluralité d'aspects de la demande d'exécution ; et
la détermination, sur la base de la validation de la première réponse, d'un libellé d'état de fraude de la demande d'exécution,
sachant que le libellé d'état de fraude de la demande d'exécution est une demande d'exécution frauduleuse lorsque la première réponse ne correspond pas aux données de contenu extraites, et
sachant que le libellé d'état de fraude de la demande d'exécution est à une demande d'exécution authentique lorsque la première réponse correspond aux données de contenu extraites.

8. Le système d'après la revendication 7, sachant que le libellé d'état de fraude de la demande d'exécution est déterminé comme étant une demande d'exécution frauduleuse lorsqu'il est établi que la première réponse ne correspond pas aux données de contenu extraites.

9. Le système d'après la revendication 7, sachant que les opérations comprennent en outre :
la sélection, sur la base de la première réponse dont la correspondance avec les données de contenu extraites a été validée, d'une deuxième invite parmi la pluralité d'invites stockées dans la base de données d'invites ;
la génération, sur la base au moins en partie de la première réponse, d'une deuxième invite d'entrée de vérification ;
la fourniture de la deuxième invite d'entrée de vérification et de données d'imagerie associées aux données de contenu extraites, au modèle linguistique ;
la validation d'une deuxième réponse en comparant la deuxième réponse aux données de contenu extraites et/ou à la première réponse, sachant que la deuxième réponse est générée à l'aide du modèle linguistique en réponse à la deuxième invite d'entrée de vérification et aux données d'imagerie ; et
la détermination, sur la base de la validation de la deuxième réponse, d'un libellé d'état de fraude de la demande d'exécution ;
sachant que le libellé d'état de fraude de la demande d'exécution est déterminé comme étant une demande d'exécution frauduleuse lorsqu'il est établi que la deuxième réponse ne correspond pas aux données de contenu extraites et/ou à la première réponse.

10. Le système d'après l'une quelconque des revendications de 7 à 9, sachant que les opérations comprennent en outre :
la génération d'un vecteur numérique correspondant à chaque token dans les données de contenu ;
l'attribution de données de position à chaque vecteur numérique sur la base de la position de chaque token dans une séquence des données de contenu ;
la capture d'informations contextuelles à partir des données de contenu sur la base des données de position correspondant à chaque vecteur numérique ; et
la génération de la première réponse sur la base des informations contextuelles capturées.

11. Le système d'après l'une quelconque des revendications de 7 à 10, sachant que le modèle linguistique inclut une pluralité de couches de conversion de données destinées à capturer les informations contextuelles, ainsi qu'une couche de classification linéaire destinée à générer la première réponse sur la base des informations contextuelles ;
sachant que chacune de la pluralité des couches de conversion de données comprend une couche de représentation de données, une couche de codage positionnel et une couche de focalisation multi-têtes.

12. Le système d'après l'une quelconque des revendications de 7 à 11, sachant que la capture des informations contextuelles comprend l'intégration des informations contextuelles dans un vecteur de représentation sur la base des informations contextuelles de tokens voisins dans la séquence des données de contenu

13. Un support non transitoire lisible par ordinateur (*computer-readable media* - CRM) comprenant des instructions stockées sur celui-ci qui, lorsqu'elles sont exécutées par au moins un processeur d'au moins un dispositif informatique, amènent ce dispositif à effectuer des opérations comprenant :
l'extraction de données de contenu à partir d'une pluralité de documents liés à une demande d'exécution d'une demande d'indemnisation ;
la sélection, sur la base des données de contenu extraites, d'une première invite parmi une pluralité d'invites stockées dans une base de données d'invites,
sachant que ladite sélection comprend :
l'analyse des données de contenu extraites afin de comprendre le contexte et les exigences de la demande d'exécution,
la réalisation, sur la base des données de contenu extraites et analysées, d'une recherche par mots-clés, ainsi que
l'évaluation de la pluralité d'invites stockés dans la base de données d'invites, et l'identification de la première invite qui correspond le mieux aux données de contenu extraites ;
la génération, sur la base au moins en partie des données de contenu extraites et sur la base au moins en partie de l'invite sélectionnée, d'une première invite d'entrée de vérification ;
sachant que l'invite sélectionnée est un modèle d'invite, et
sachant que la première invite d'entrée de vérification est générée en combinant les données de contenu extraites avec l'invite sélectionnée ;
la génération, à l'aide d'un modèle linguistique, d'une première réponse basée sur la première invite d'entrée de vérification ;
la validation de la première réponse générée à l'aide du modèle linguistique en comparant la première réponse aux données de contenu extraites afin de vérifier l'authenticité d'un aspect parmi une pluralité d'aspects de la demande d'exécution ; et
la détermination, sur la base de la validation de la première réponse, d'un libellé d'état de fraude de la demande d'exécution,
sachant que le libellé d'état de fraude de la demande d'exécution est une demande d'exécution frauduleuse lorsque la première réponse ne correspond pas aux données de contenu extraites, et
sachant que le libellé d'état de fraude de la demande d'exécution est à une demande d'exécution authentique lorsque la première réponse correspond aux données de contenu extraites.

14. Le CRM non transitoire d'après la revendication 13, sachant que les opérations comprennent en outre :
la sélection, sur la base de la première réponse dont la correspondance avec les données de contenu extraites a été validée, d'une deuxième invite parmi la pluralité d'invites stockées dans la base de données d'invites ;
la génération, sur la base au moins en partie de la première réponse, d'une deuxième invite d'entrée de vérification ;
la fourniture de la deuxième invite d'entrée de vérification et de données d'imagerie associées aux données de contenu extraites, au modèle linguistique ;
la validation d'une deuxième réponse en comparant la deuxième réponse aux données de contenu extraites et/ou à la première réponse, sachant que la deuxième réponse est générée à l'aide du modèle linguistique en réponse à la deuxième invite d'entrée de vérification et aux données d'imagerie des données de contenu extraites ; et
la détermination, sur la base de la validation de la deuxième réponse, d'un libellé d'état de fraude de la demande d'exécution ;

15. Le CRM non transitoire d'après la revendication 13 ou 14, sachant que le libellé d'état de fraude de la demande d'exécution est déterminé comme étant une demande d'exécution frauduleuse lorsqu'il est établi que la première réponse ne correspond pas aux données de contenu extraites, ou lorsqu'il est établi que la deuxième réponse ne correspond pas aux données de contenu extraites et/ou à la première réponse ;
et/ou
sachant que les opérations comprennent en outre :
la génération d'un vecteur numérique correspondant à chaque token dans les données de contenu ;
l'attribution de données de position à chaque vecteur numérique sur la base de la position de chaque token dans une séquence des données de contenu ;
la capture d'informations contextuelles à partir des données de contenu sur la base des données de position correspondant à chaque vecteur numérique, sachant que le modèle linguistique inclut une pluralité de couches de conversion de données pour capturer les informations contextuelles ; et
la génération de la première réponse sur la base des informations contextuelles capturées, sachant que le modèle linguistique inclut une couche de classification linéaire pour générer la première réponse sur la base des informations contextuelles.
